# EUROPEAN PATENT APPLICATION

(11) **EP 4 231 166 A1**
(43) Date of publication of application: **23.08.2023**
(21) Application number: 23182927.6
(22) Date of filing: 30.12.2016
(51) Int. Cl.: G06F 15/173, G06F 9/46, G06F 8/60, G06F 9/455, G06F 9/50, H04L 12/46, H04L 41/0654, H04L 43/0817, H04L 43/10, H04L 61/45, H04L 61/10, H04L 67/10, H04L 41/40, H04L 43/20

(54) **VIRTUAL NETWORK, HOT SWAPPING, HOT SCALING, AND DISASTER RECOVERY FOR CONTAINERS**

(30) Priority: 22.01.2016 US 201662286259 P; 05.05.2016 US 201662332385 P; 29.07.2016 US 201615223740; 04.08.2016 US 201615228471; 28.12.2016 US 201615392820
(62) Divisional of application: 21204741.9
(71) Applicant: Equinix, Inc., Redwood City, CA 94065 (US)
(72) Inventor: Rangasamy, Venkatachalam, San Jose, 94065 (US); Kumar, Parveen, Fremont (US); Jeyapaul, Jaganathan, Saratoga, 95070 (US); Lillie, Brian J., Los Altos, 95070 (US)
(74) Representative: Murgitroyd & Company

(57) **Abstract**

Techniques are disclosed for facilitating inter-container communications, via a cloud exchange, for containers executing at logically isolated networks. In one example, the techniques of the disclosure provide a method including sending, by a container to a cloud exchange via an application programming interface exposed by an interconnection platform of the cloud exchange, container registration data for the container, the container registration data including a network address for a host that executes the container and a container identifier for the container. Further techniques are disclosed for applications of inter-container communications via a cloud exchange, including hot swapping and hot scaling containers between cloud services, and automated disaster recovery across containers from a failed cloud service to a backup cloud service.

## Description

This application claims the benefit of U.S. Provisional Application No. 62/286,259, filed January 22, 2016; U.S. Provisional Application No. 62/332,385, filed May 5, 2016; U.S. Patent Application No. 15/223,740, filed July 29, 2016; U.S. Patent Application No. 15/228,471, filed August 4, 2016; and U.S. Patent Application No. 15/392,820, filed December 28, 2016, the entire contents of each of which are incorporated by reference herein.

### TECHNICAL FIELD

The disclosure relates to computer networks and, more specifically, to cloud services.

### BACKGROUND

Cloud computing refers to the use of dynamically scalable computing resources accessible via a network, such as the Internet. The computing resources, often referred to as a "cloud," provide one or more services to users. These services may be categorized according to service types, which may include for examples, applications/software, platforms, infrastructure, virtualization, and servers and data storage. The names of service types are often prepended to the phrase "as-a-Service" such that the delivery of applications/software and infrastructure, as examples, may be referred to as Software-as-a-Service (SaaS) and Infrastructure-as-a-Service (IaaS), respectively.

The term "cloud-based services" or, more simply, "cloud services," refers not only to services provided by a cloud, but also to a form of service provisioning in which cloud service customers contract with cloud service providers for the online delivery of services provided by the cloud. Cloud service providers ("CSPs") manage a public, private, or hybrid cloud to facilitate the online delivery of cloud services to one or more cloud service customers.

A cloud exchange may allow private networks of a customer of the cloud exchange to be interconnected to any other customer of the cloud exchange at a common point, thereby allowing direct exchange of network traffic between the networks of the customers. Customers may include network carriers (or network service providers), enterprises, and other users of cloud services offered by one or more CSPs. One example use of a cloud exchange is to interface a group of customers to a group of CSPs. Each CSP may provide customer access to a "cloud" computing network, wherein the customer stores, manages, and processes data on a network of remote servers rather than on a local server or personal computer of the customer.

### SUMMARY

In general, the disclosure describes techniques for facilitating inter-container communications, via a cloud exchange, for containers (e.g., Docker containers, Linux Container (LXC) containers, CoreOS Rocket containers) executing at logically isolated networks. For example, a cloud exchange may provide connectivity between an enterprise network that executes one or more applications (e.g., micro-services) using containers and a cloud service provider network that also executes one or more applications using containers. By extending the containers to register and communicate with the cloud exchange and to communicate with one another via the cloud exchange-provisioned connectivity, the techniques may not only facilitate communications between containers but also in some cases provide the cloud exchange with increased control over container operations and deployment to enhance the quality of customer services.

The techniques may provide one or more advantages. For instance, a cloud exchange provider may leverage the techniques to provide, via a cloud exchange, a backup service to an enterprise customer that executes applications using containers on its enterprise network. The enterprise customer may purchase cloud-based resources from a CSP for executing container-based applications deployed to the CSP by the enterprise. The cloud exchange may provision connectivity between containers executing at the enterprise network and containers executing at the CSP. In addition, using information obtained from the containers executing at the CSP and the enterprise network, the cloud exchange may associate a primary container executing at the enterprise network and a secondary container executing at the CSP and direct the containers to exchange communications for backup purposes. For instance, the primary container may periodically ping the secondary container via the cloud exchange to determine the secondary container is operational for executing a deployed application. In the event of a failure of the primary container application, overload of the primary container application, or other triggering event, the primary container may redirect application loads to the secondary container executing at the CSP. In this way, the cloud exchange facilitates seamless application replication and backup services to the cloud.

As another example, the cloud exchange provider may leverage the techniques to provide, via the cloud exchange, inter-container communications via a cloud exchange to perform hot swaps and hot scaling of containers, including applications or other resources executing in the containers, to additional containers that may execute on the same or different cloud service networks. The hot swaps may involve copying all code, data, and other state for applications, runtime, and other resources from one container to another, by a cloud exchange, while the container is executing. The cloud exchange may thereby swap (or copy or transfer) the first container to a second container, while the first container is hot, or in the midst of execution, without interrupting or interfering with the execution of the first container and its applications and/or other resources.

The hot scaling may involve the cloud exchange copying portions of code, data, and other state for applications, runtime, and other resources from one container to a number of containers, by a cloud exchange, while the container is executing. The hot scaling may involve the cloud exchange orchestrating and cloning events being executed by the container without impacting applications being executed by the container. This may involve the cloud exchange briefly placing a hold on application transactions during a copy or transfer of code, data, or other state from the first container to the second container, before quickly resuming execution of the events by the containerized applications in the new container. The cloud exchange may thereby scale, or expand, the first container to a number of additional containers, while the first container is hot, or in the midst of execution, also without interrupting or interfering with the execution of the first container and its applications and/or other resources.

For example, a cloud exchange may provide connectivity between an enterprise network that executes one or more applications (e.g., micro-services) using containers, and one or more cloud service provider networks that also execute one or more applications using containers. By causing the containers to register and communicate with the cloud exchange, and to communicate data from one or more first containers to one or more second containers via the cloud exchange-provisioned connectivity, various techniques of this disclosure may enable hot swaps and hot scaling of containerized applications and other resources for the enterprise, elastically and automatically across a wealth of container provisioning resources, including across containers executing at networks or cloud services with different underlying technology infrastructures.

The techniques of this disclosure may provide various advantages. For instance, a cloud exchange provider may leverage the techniques of this disclosure to provide, via a cloud exchange, a hot swap and hot scaling service to an enterprise customer. The enterprise customer may purchase cloud-based resources from a cloud service provider ("CSP") for executing container-based applications deployed to the CSP by the enterprise. The cloud exchange may provision connectivity between containers executing at one or more CSPs, and potentially containers executing at the enterprise's network, and may enable automatic hot swapping and hot scaling of the containers across a potentially large and potentially heterogeneous array of container provisioning resources. A cloud exchange configured to perform hot container swap and hot container scaling techniques of this disclosure may thus expand the scope and flexibility of container resources available to a cloud service customer without imposing container management burden on the enterprise customer.

The hot container swap and hot container scaling techniques of this disclosure may also contribute to additional services and functions performed by a cloud exchange, such as automatic backup, and expanding scale to handle sudden increases in application demand. For example, in the event of a failure of a first container or other triggering event, the cloud exchange may hot swap the first container for a second container, potentially from a first container at the enterprise network to a second container at a CSP or from a first container at a first CSP to a second container at a second CSP, and redirect application loads for the first container to the second container. As another example, in the event of an overload of a first container or other triggering event, the cloud exchange may hot scale the first container across one or more additional containers, and direct some of the application loads for the first container across the one or more additional containers. In ways such as these, the cloud exchange facilitates seamless application replication and backup services to the cloud. In addition, in some examples, the techniques may permit an enterprise that uses cloud services to avoid an application outage during scheduled or unscheduled downtime of a cloud service provider.

As another example, the cloud exchange provider may leverage the techniques to provide, via the cloud exchange, a disaster recovery or other replication service to an enterprise customer that executes applications using containers on its enterprise network. Because containers executing at different CSPs are isolated from one another, they are unable to exchange data. The cloud exchange may provision connectivity between the different CSPs to enable inter-container communications between respective containers executing at the different CSPs. If a container fails (e.g., by suffering a connection problem or a software bug), the cloud exchange may switch the customer from a primary container executing at a first CSP to a secondary container executing at a second CSP so that the customer may continue to access the application. In a further example, a CSP itself may desire to manage the usage of network resources, and selectively provision or de-provision containers to manage the load on the network. In a further example, a customer may desire to share files or information between two cloud services to which he subscribes, which may require the cloud exchange to pass information from a first application within a first container in a first cloud to a second application within a second container in a second cloud, for example.

A cloud exchange may thus coordinate automated cloud-based disaster recovery (DR) across containers from a failed or disrupted cloud service to a backup cloud service. In various examples, an orchestration engine of the cloud exchange includes a disaster recovery (DR) manager that detects an indication of a disruption in service delivery by a cloud service to an enterprise customer of the cloud exchange provider, and begins copying and preserving code, data, and other state from the failed cloud service. The DR manager provisions layers of a new DR infrastructure in containers of a cloud service provider that the DR manager has selected to host the DR infrastructure as a backup for the failed cloud service and thereby provide, at least temporarily, a backup cloud service to the enterprise. The DR infrastructure may include multiple layers corresponding to different functions of the cloud service. Such DR infrastructure layers may include a storage layer, compute layer, network layer, and/or interface layer.

In some examples, the DR infrastructure in the backup cloud service may not be immediately available to handle service requests from the enterprise customer. To avoid lost service requests while the DR infrastructure is being provisioned, the DR manager of the cloud exchange may provision a DR infrastructure interface layer to temporarily intercept and buffer service requests being sent by the enterprise to the failed cloud service. The cloud exchange networking platform may be configured to direct service requests from the enterprise customer to the DR infrastructure interface layer of the cloud exchange during this temporary buffering period.

The DR manager may push the copied code, data, and other state to the new DR infrastructure in the containers of the backup cloud service. Once the DR infrastructure is fully provisioned in the backup cloud service and therefore capable of handling service requests, the DR infrastructure interface layer may send the buffered service requests to the new DR infrastructure, as executed by containers in the backup cloud service, for processing. In some cases, the cloud exchange may provide inter-container communications between the failed cloud service and the new DR infrastructure in the backup cloud service. The complete set of DR activities performed and orchestrated by the cloud exchange orchestration engine involving the failed cloud service and the selected backup cloud service may be referred to as a DR process. The failed cloud service and the backup cloud service may be offered by respective cloud service providers co-located within a data center to interconnect with and provide cloud services to an enterprise via the cloud exchange.

In some cases, the DR manager may lock, or place a hold on, the operations of one or more executing containers of the failed cloud service and copy code, data, and other state for applications, microservices, runtime, and other resources from the containers of the failed cloud service. Placing the hold on the operations of the one or more of the containers of the first cloud service may include locking state stored to an in-memory data store at the first cloud service. The DR manager at the cloud exchange may thereby copy the containers while the containers are in the midst of execution, including copying and preserving current operations and instructions in the midst of execution, without interfering with the execution of the container and its applications and/or other resources.

The DR manager may then communicate and copy the code and state copied from the containers of the failed cloud service to the containers of the new DR infrastructure layers at the selected backup cloud service, once the DR infrastructure has been provisioned at the backup cloud service. The DR manager of the cloud exchange may thus clone processes, instructions, and other events being executed by containers at the failed cloud service, orchestrate the reproduction of the code and state from the containers of the failed cloud service in the containers of the backup cloud service, and resume execution of the processes, instructions, and other events from the failed cloud service in the containers of the backup cloud service, from where those processes, instructions, and other events left off, including in mid-execution.

The techniques of this disclosure may provide various advantages. For instance, a cloud exchange provider may leverage the techniques of this disclosure to provide, via a cloud exchange, containerized disaster recovery services to an enterprise customer. The enterprise customer may purchase cloud-based resources from one or more cloud service providers ("CSPs") for executing container-based applications deployed to a first cloud service operated by the CSP by the enterprise. The cloud exchange may provision connectivity between an enterprise customer of the cloud exchange and containers executing at a cloud service, with disaster recovery responsiveness and disaster recovery infrastructure creation and operation enabled seamlessly as part of the cloud computing services contracted for by the enterprise with the cloud exchange provider. The cloud exchange may remain alert to any indications of disruption to the functions provided by the cloud service, and may remain ready to intervene and initiate a set of DR processes if the cloud exchange detects a qualifying disruption, as may be previously user-defined as part of the DR services.

In the event of detecting a qualifying disruption, the cloud exchange may implement the DR processes, thereby copying the code and state from the containers of a failed cloud service to containers of a selected backup cloud service, potentially across a large and potentially heterogeneous array of container provisioning resources among a plurality of heterogeneous cloud services. Once replicated versions of the containers from the failed cloud service are up and running at the backup cloud service, the cloud exchange may also redirect cloud service traffic, such as application flows, to the replicated containers at the failed cloud service, without needing to change the Uniform Resource Identifiers (URIs) of the containerized resources provisioned to the backup cloud service. A cloud exchange configured to perform disaster recovery techniques of this disclosure may thus expand the scope and flexibility of container resources available to a cloud service customer without imposing container management and disaster recovery burdens on the cloud service customer. In ways such as these, a cloud exchange of this disclosure facilitates seamless disaster recovery in the cloud.

In one example, this disclosure describes a method including: sending, by a container to a cloud exchange via an application programming interface exposed by an interconnection platform of the cloud exchange, container registration data for the container, the container registration data including a network address for a host that executes the container and a container identifier for the container.

In another example, this disclosure describes a method including: receiving, by a cloud exchange from a container executing at a private network coupled to the cloud exchange, container registration data for the container, the container registration data including a network address for a host that executes the container and a container identifier for the container; and storing, by the cloud exchange, the container registration data.

In another example, this disclosure describes a computing device including: at least one processor operably coupled to a memory; a kernel configured for execution by the at least one processor; and a container configured to execute by the kernel, wherein the container includes a network module configured to output container registration data to a cloud exchange via an application programming interface exposed by an interconnection platform of the cloud exchange, the container registration data including a network address for a host that executes the container and a container identifier for the container.

In another example, this disclosure describes a cloud exchange including: a network; and an interconnection platform configured to configure the network to interconnect a plurality of private networks, wherein the cloud exchange is configured to receive, from a container executing at a private network of the plurality of private networks and via the interconnection platform, container registration data for the container, the container registration data including a network address for a host that executes the container and a container identifier for the container.

In another example, this disclosure describes a method including: transmitting, by a first container of a first private network of a plurality of private networks coupled to a cloud exchange and to a router of the cloud exchange, a first data communication to request an indication of a health of a second container of a second private network of the plurality of private networks coupled to the cloud exchange; and receiving, by the first container and from the router, a second data communication originated by a second container of a second private network of the plurality of private networks coupled to the cloud exchange, the second data communication indicating the health of the second container.

In another example, this disclosure describes a method comprising: storing, with at least one processor of a cloud exchange, data indicating an association of a first container of a first private network with a second container of a second private network, wherein the first private network and the second private network are coupled to the cloud exchange to send and receive data packets via the cloud exchange; and sending, with the at least one processor of the cloud exchange, based on the association, state of the first container to the second container.

In another example, this disclosure describes a computing system comprising at least one memory device and at least one processor comprised in a cloud exchange, operably coupled to the at least one memory device, and configured to execute instructions to: store data indicating an association of a first container of a first private network with a second container of a second private network, wherein the first private network and the second private network are coupled to the cloud exchange to send and receive data packets via the cloud exchange; and send, based on the association, state of the first container to the second container.

In another example, this disclosure describes a computer-readable storage medium comprising instructions for causing at least one programmable processor of a cloud exchange to: store data indicating an association of a first container of a first private network with a second container of a second private network, wherein the first private network and the second private network are coupled to the cloud exchange to send and receive data packets via the cloud exchange; send, based on the association, state of the first container to the second container; receive, by the cloud exchange, cloud service traffic from an enterprise network; and redirect, by the cloud exchange, the cloud service traffic from the first container to the second container.

In another example, this disclosure describes a method that includes detecting, with a cloud exchange, an indication of a disruption in a first cloud service provided by a first cloud service provider network coupled to the cloud exchange to send and receive data packets via the cloud exchange. The method further includes provisioning, with the cloud exchange, in response to detecting the indication of the disruption in the first cloud service, disaster recovery infrastructure layers in containers of a second cloud service provided by a second cloud service provider network coupled to the cloud exchange to send and receive data packets via the cloud exchange. The method further includes obtaining, with the cloud exchange, code and state from containers of the first cloud service. The method further includes communicating, with the cloud exchange, the code and state to the disaster recovery infrastructure layers in the containers of the second cloud service.

In another example, this disclosure describes a computing device comprising: at least one processor operably coupled to a memory; and an orchestration engine of a cloud exchange, the orchestration engine configured for execution by the at least one processor. The orchestration engine is configured to detect an indication of a disruption in a first cloud service provided by a first cloud service provider network coupled to the cloud exchange to send and receive data packets via the cloud exchange. The orchestration engine is further configured to provision, in response to detecting the indication of the disruption in the first cloud service, disaster recovery infrastructure layers in containers of a second cloud service provided by a second cloud service provider network coupled to the cloud exchange to send and receive data packets via the cloud exchange. The orchestration engine is further configured to obtain code and state from containers of the first cloud service. The orchestration engine is further configured to communicate the code and state to the disaster recovery infrastructure layers in the containers of the second cloud service.

In another example, this disclosure describes a computer-readable medium comprising instructions for causing at least one programmable processor of a cloud exchange to detect an indication of a disruption in a first cloud service provided by a first cloud service provider network coupled to the cloud exchange to send and receive data packets via the cloud exchange. The instructions further cause the at least one programmable processor of the cloud exchange to provision, in response to detecting the indication of the disruption in the first cloud service, disaster recovery infrastructure layers in containers of a second cloud service provided by a second cloud service provider network coupled to the cloud exchange to send and receive data packets via the cloud exchange. The instructions further cause the at least one programmable processor of the cloud exchange to obtain code and state from containers of the first cloud service. The instructions further cause the at least one programmable processor of the cloud exchange to communicate the code and state to the disaster recovery infrastructure layers in the containers of the second cloud service.

The details of one or more examples of the techniques of this disclosure are set forth in the accompanying drawings and the description below. Other features, objects, and advantages of the techniques of this disclosure will be apparent from the description and drawings, and from the claims.

### BRIEF DESCRIPTION OF DRAWINGS

FIG. 1 is a block diagram illustrating an example network in accordance with example techniques of this disclosure.
FIG. 2 is a block diagram illustrating an example network in accordance with example techniques of this disclosure.
FIG. 3 is a block diagram illustrating an example network in accordance with example techniques of this disclosure.
FIG. 4 is a block diagram illustrating an example router in accordance with example techniques of this disclosure.
FIG. 5 is a block diagram illustrating an example private network in accordance with example techniques of this disclosure.
FIG. 6 is a block diagram illustrating an example container in accordance with example techniques of this disclosure.
FIG. 7 is a block diagram illustrating a cloud exchange with an orchestration engine that includes a hot swap manager and a DR manager according to techniques described in this disclosure.
FIG. 8 is a flowchart illustrating an example method in accordance with example techniques of this disclosure.
FIG. 9 is a flowchart illustrating an example method for determining the health of a container according to the techniques of the disclosure.
FIG. 10 is a flowchart illustrating an example method 800 for transmitting container registration data for a container.
FIG. 11 is a flowchart illustrating an example method in accordance with example techniques of this disclosure.
FIG. 12 is a flowchart illustrating an example method in accordance with example techniques of this disclosure.
FIG. 13 is a block diagram illustrating one example of a computing device that operates in accordance with one or more techniques of the present disclosure.

### DETAILED DESCRIPTION

In general, the disclosure describes techniques for coordinating, by a cloud-based services exchange, or "cloud exchange," inter-container communications between containers (e.g., Docker containers, LXC containers, CoreOS Rocket containers) for enabling inter-container communication, via the cloud exchange, for containers executing at logically isolated networks, and for providing services enabled by such inter-container virtual networking, such as hot swaps and hot scaling of containers and disaster recovery across containers in different networks. For example, techniques are described for creating a virtual private network to allow virtualized containers within a first CSP connected to the cloud exchange, to transparently communicate with virtualized containers within a second CSP connected to the cloud exchange.

In some examples, a cloud exchange may transfer the state of a first container at the initial cloud service, including executable code, and other state involved in the applications, microservices, runtime, and other resources executing on the first container, including the state of resources in mid-execution, to a second container, while the applications of the first container are executing, such that the applications continue executing at the second container. Such transferring of the state of the first container may involve swapping the containerized code and data to a different container, or involve scaling at least some of the containerized code and data to additional containers to elastically increase the processing capability devoted to the containerized applications. Such swapping or scaling the code, data, and other state of a container to one or more other containers and continuing execution of code, processes, or services in the new one or more containers may be referred to as "hot swapping" and "hot scaling" respectively. In other examples involving a disaster recovery process, the cloud exchange may transfer the code, data, and other state of the first container in mid-execution to a second container of a newly provisioned disaster recovery ("DR") infrastructure at a second cloud service.

An orchestration engine of the cloud exchange may also include a disaster recovery manager ("DR manager") that detects an indication of a qualifying disruption in a cloud service provided to an enterprise customer of the cloud exchange, copies and preserves data and other state from the cloud service provider network that provides the cloud service, selects a second cloud service to host a DR infrastructure, provisions layers of the new DR infrastructure in containers in the selected second cloud service, and provisions a DR infrastructure interface layer to receive and buffer service requests from the enterprise customer network until the containers of the newly provisioned DR infrastructure layers at the selected second cloud service are operational to handle the service requests.

The hot swap or hot scaling of the containerized applications may be to different containers located within the same subnet of the same cloud service, to different containers in different subnets of the same cloud service, or to an entirely different cloud service, in different implementations. In cases of hot swaps or hot scaling across different cloud services, which may have different cloud service infrastructure technology and which may be private or public cloud services, techniques of this disclosure may internally manage all aspects of translating code, data, and state for applications, runtime, and other resources between different cloud infrastructure technology stacks. The initial cloud service and selected second cloud service may be provided by different cloud service providers. The initial cloud service provider network and the selected second cloud service provider network may be co-located in a data center (or "colocation facility") deployed by a cloud exchange provider and that includes that the cloud exchange to interconnect the initial cloud service provider network and the enterprise customer network, as well as the second selected cloud service provider network and the enterprise customer network. Techniques of this disclosure may thus ensure that the containerized applications are hot swapped or hot scaled across the different cloud services, or replicated from an initial cloud service to a disaster recovery infrastructure at a second cloud service, smoothly and with all technology infrastructure differences between the different cloud services automatically managed and made compatible by the cloud exchange, as if the potentially heterogeneous underlying cloud services were a uniform container provisioning resource, while also providing transparency into the hot swapping or hot scaling processes or DR processes to the customers or other users.

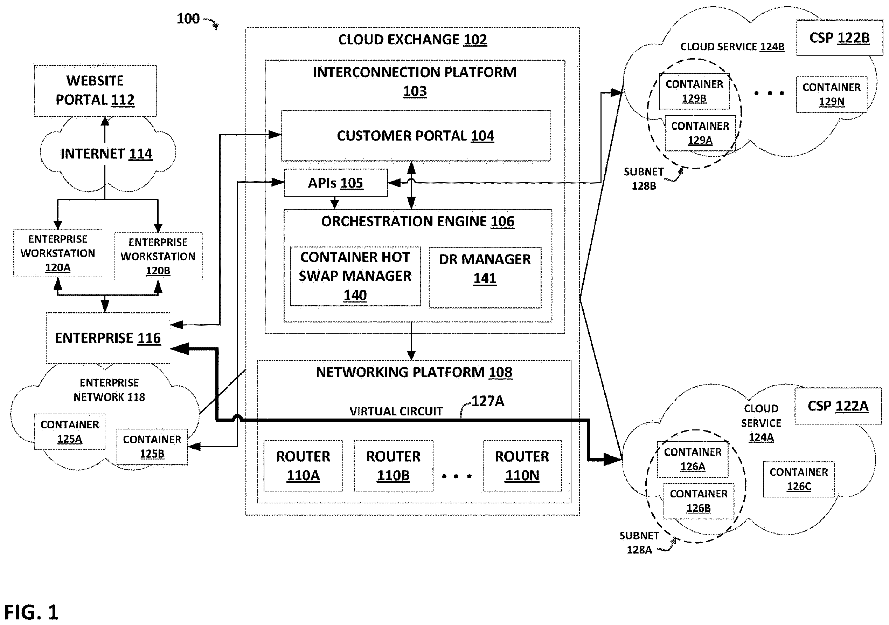

FIG. 1 is a block diagram illustrating an example system in accordance with example techniques of this disclosure. A cloud exchange may facilitate virtual connections for cloud services delivery, including with services such as hot swap and hot scaling capability and/or disaster recovery capability, from one or more cloud service providers to one or more cloud service customers. The cloud exchange may enable cloud customers, such as enterprise customers of the cloud exchange provider, to bypass the public Internet to directly connect to cloud service providers ("CSPs") so as to improve performance, reduce costs, increase the security and privacy of the connections, and leverage cloud computing for additional applications. In this way, enterprises, network carriers, and SaaS customers, for instance, can integrate cloud services with their internal applications as if such services were part of or otherwise directly coupled to their own data center network. The cloud exchange includes an orchestration engine that may perform hot swaps and hot scaling of containers and applications executing in the containers, and that may perform disaster recovery functions that include replicating containers and applications executing in the containers from an affected cloud service to a selected second cloud service.

Cloud exchange 102 may interface cloud service customers such as enterprise 116 to a plurality of cloud services 124A-124B (collectively, "cloud services 124") provided by CSP networks 122A-122B (hereafter, "CSPs 122"), in a cloud environment 100. As one example of a cloud exchange, an Equinix Cloud Exchange (ECX) provided by Equinix, Inc. may interface a plurality of cloud service customers (e.g., enterprises, organizations, and individuals) to a plurality of CSPs (e.g., such as Microsoft Azure and Amazon Web Services). Cloud exchange 102 may provide one or more interconnections for cloud services delivery from the multiple CSPs 122 to enterprise 116, as well as interconnections between the multiple CSPs 122. An interconnection may represent a physical cross-connect or a virtual circuit in various examples. Additional details of interconnecting networks via a cloud exchange are found in U.S. Provisional Application No. 62/072,976, U.S. Patent Application No. 14/927,306, and U.S. Patent Application No. 15/099,407, the contents of which are incorporated in their entireties by reference herein. Cloud exchange 102 includes an orchestration engine 106 that may be configured with a hot swap manager enabled to perform hot swap and/or hot scaling processes, and/or a disaster recovery (DR) manager enabled to perform DR processes, as further described below.

A CSP may provide a virtual machine hypervisor (VM) to a cloud service customer for access to the cloud network. A VM emulates virtual hardware. In other words, each VM provides a virtualized operating system and application suite for customer access. Because the VM is virtualized, the cloud service customer and its applications are isolated from both the hardware of the host and the VMs of other customers. This allows the CSP to provide cloud services that are safe and secure to the cloud service customer. The CSP may implement dozens or hundreds, for example, of VMs on a single network for access by a group of customers. However, because each VM virtualizes a complete operating system, it may consume a significant level of network resources.

A more efficient alternative to a virtual machine in many applications is a virtualized container, such as provided by the open-source Docker container application, LXC containers, or CoreOS Rocket containers. Like a VM, each container is virtualized and may remain isolated from a host machine and other containers. However, unlike a VM, each container may omit a full individual operating system, and instead provide only an operating system kernel interface, an application suite, and application-specific libraries. Each container may be executed by the host machine as an isolated user-space instance, and may share an operating system and common libraries with other containers executing on the host machine. In other words, each container may be a user-space instance from a plurality of user-space instances that share an operating system executing on the host. Thus, a cloud network using containers may require significantly less processing power, storage, and network resources than a cloud network implementing VMs. As used herein, containers may also be referred to as virtualization engines, virtual private servers, silos, or jails.

In some examples, containers are managed by their host kernel to allow limitation and prioritization of resources (CPU, memory, block I/O, network, etc.) without the need for starting any virtual machines, in some cases using namespace isolation functionality that allows complete isolation of an application's (e.g., a given container's) view of the operating environment, including process trees, networking, user identifiers and mounted file systems. In some examples, containers may be deployed according to Linux Containers (LXC), an operating-system-level virtualization method for running multiple isolated Linux systems (containers) on a control host using a single Linux kernel. LXC is an operating-system-level virtualization method for running multiple isolated Linux systems (containers) on a single control host (LXC host). An LXC does not use a virtual machine. Instead, an LXC uses a virtual environment with its own CPU, memory, block I/O, network, and/or other resource space. The LXC resource control mechanism is provided by namespaces and cgroups in the Linux kernel on the LXC host. Additional information regarding containers is found in "Docker Overview," Docker, Inc., available at docs.docker.com/engine/understanding-docker, last accessed July 9, 2016; and in Aaron Grattafiori, "Understanding and Hardening Linux Containers," NCC Group, April 20, 2016; each of which are incorporated by reference herein in their entireties.

Enterprise 116 deploys an enterprise network 118, such as an enterprise on-premises data center or private cloud, to execute containers 125A, 125B, which provide an operating environment for applications deployed by enterprise 116. In some cases, applications executed by containers 125A, 125B may be microservices. In general, microservices each implement a set of focused and distinct features or functions, and a microservice conforms to (or is usable in) an architectural pattern in which many dozens or hundreds of microservices can be independently developed and deployed. Microservices may be organized around a business capability and may implement a "broad-stack" of software for the business capability, including persistent storage and any external collaboration. The various microservices expose interfaces that enable the microservices to invoke one another to exchange data and perform the respective sets of functions in order to create one or more overall applications. Each of the microservices may adhere to a well-defined Application Programming Interface (API) and may be orchestrated by invoking the API of the microservice. Each of the microservices executes independently and exposes an interface for asynchronous invocation with respect to the other microservices.

Via cloud exchange 102, CSPs 122A-122B may make available cloud services 124A-124B, respectively, to cloud service customers such as enterprise 116, and thereby provide execution environments for applications of enterprise 116. Orchestration engine 106 may provision a virtual circuit 127A between enterprise 116 and cloud service 124A, as further described below. In the illustrated example, each cloud service 124 may host or include a plurality of containers 126 that each provides an execution environment for at least one application (e.g., microservice) deployed by enterprise 116. For example, cloud service 124A may comprise containers 126A, 126B, ... 126N, which may represent any number of containers (within the constraints of engineering) executing on computing resources of cloud service 124A, and cloud service 124B may comprise containers 129A, 129B, ... 129N, which may likewise represent any number of containers executing on computing resources of cloud service 124B. Applications executing on containers 125 may communicate with applications executing on containers 126, 129 via virtual circuit 127A and/or other virtual circuits 127B, 127C as described below ("virtual circuits 127") provisioned for cloud exchange 102 to interconnect enterprise 116 with cloud services 124. Cloud exchange 102 may provision virtual circuits 127 in networking platform 108 of cloud exchange 102, to transport data packets between containers 126 of the first cloud service 124A and containers 129 of the second cloud service 124B. Cloud exchange 102 (or constituent systems thereof, such as a hot swap manager 140 or a disaster recovery (DR) manager 141, as described below) may communicate code and state from the containers 126 of the first cloud service 124A to the containers 129 of the DR infrastructure layers 144 of the second cloud service 124B via virtual circuits 127.

Further, a cloud service may group a plurality of containers into network subnets for organizational and network addressing purposes. In the example of FIG. 1, cloud service 124A may group representative containers 126A and 126B (for example) into subnet 128A, while cloud service 124B may group containers 129A and 129B (for example) into subnet 128B. Containers 126A and 126B of subnet 128A may execute on the same or on different hosts (e.g., servers, computer hardware units, or other computing resources), the one or more hosts being addressable by a network address that is a member of subnet 128A. In one example, a cloud service may group a plurality of containers into a plurality of subnets to organize services into different subnets. In another example, a cloud service may group a plurality of containers into a plurality of subnets to divide containers among customers of the cloud service.

Cloud exchange 102 includes an interconnection platform 103 that may expose a collection of software interfaces, also referred to and described herein as application programming interfaces (APIs) 105, which may allow access to capabilities and assets of the interconnection platform in a programmable manner. The APIs 105 may provide an extensible framework that allows software developers associated with customers and partners of cloud exchange 102 to build software applications that access interconnection platform 103 that automatically manages interconnection with multiple cloud service providers 122 participating in interconnection platform 103, to provide interconnection and other services described herein to customers of the provider of cloud exchange 102. Developers from network services providers, cloud service providers, managed service providers, and other enterprises may use the software interfaces exposed by interconnection platform 103 and defined by APIs 105 to build custom applications and frameworks for seamless interaction with interconnection platform 103, to facilitate the delivery of cloud services from cloud service providers 122 to cloud service customers.

These software interfaces defined by APIs 105 enable machine-to-machine communication for near real-time setup and modifications of interconnections, and facilitate inter-container communications and container control as described herein. The software interfaces defined by APIs 105 may also reduce or eliminate the need for human interaction for the entire interconnection setup and management process. In this way, the software interfaces provide an automated and seamless way to use and manage containers executing at multiple different cloud services or networks connected to cloud exchange 102.

Enterprise 116 may interface a plurality of enterprise workstations 120A-120B (collectively, "enterprise workstations 120") of enterprise 116 to networks outside of enterprise 116. Enterprise 116 may interface enterprise workstations 120 to websites connected to the Internet 114, for example, website portal 112, which may provide enterprise workstations 120 with access to the website of one of CSPs 122. Further, enterprise 116 may interface enterprise workstations 120 to cloud exchange 102. As used herein, actions imputed to enterprise 116, cloud exchange 102, or CSPs 122 may refer to a human operator or automated agent directed by the enterprise 116, cloud exchange 102, or CSP 122, respectively. Each of enterprise network 118, cloud service provider 122 networks, and cloud exchange 102 may be located within a data center (or "colocation facility" or "interconnection facility").

Enterprise workstations 120 may access customer portal 104 to log into cloud exchange 102. Customer portal 104 may represent a web-based application exposed to customers via a website and accessible using a browser. Customers may use customer portal 104 to sign up for or register cloud services. After a customer has registered with cloud exchange 102 via customer portal 104, the customer may receive a service license identifier (e.g., a registration key). The service license identifier may identify the customer, the type of customer (e.g., business or individual), the services the customer has access to (e.g., public cloud services provided by, e.g., Microsoft Azure or Amazon Web Services), and service parameters such as an amount of service purchased in terms of, e.g., cloud service provider resources (e.g., bandwidth, processing units). Via customer portal 104, e.g., an agent of enterprise 116 may receive service license identifiers from the cloud service providers and register the service license identifiers with cloud exchange 102, and/or request or configure hot swapping, hot scaling, and/or disaster recovery services using customer portal 104, as described in further detail below.

In some examples, interconnection platform 103 may conform to a microservice-based application architecture. In the example of FIG. 1, interconnection platform 103 includes an internal orchestration engine 106 that organizes, directs and integrates underlying microservices, as well as other software and network sub-systems, for managing various services provided by the cloud exchange 102. Orchestration engine 106 may include container hot swap manager 140 and/or disaster recovery (DR) manager 141, as further described below.

Orchestration engine 106 of the interconnection platform 103 for cloud exchange 102 may facilitate the dynamic creation of private connections between enterprise 116 and any of CSPs 122, as well as between CSPs 122, cloud service customers, network service providers, a cloud exchange administrator, or other customers or users of the cloud exchange. Orchestration engine 106 may receive registration information and service license identifiers from customer portal 104 obtained from users at registration. The orchestration framework may use this information to coordinate interactions between a heterogeneous set of unrelated APIs, microservices, Web services, sockets, remote method invocations (RMIs), and analogous entities and services, that are orchestrated through a workflow, to seamlessly create a private connection (e.g., a virtual circuit) between the enterprise and the multiple cloud service providers. Orchestration engine 106 may be responsible for handling the entire request, which may be received from various channels such as a web portal and an API. Specific techniques for the design and implementation of an orchestration engine are described in U.S. Provisional Application No. 62/072,976, U.S. Provisional Application No. 62/286,259, and U.S. Patent Application No. 14/927,306, the entire contents of which are incorporated by reference herein.

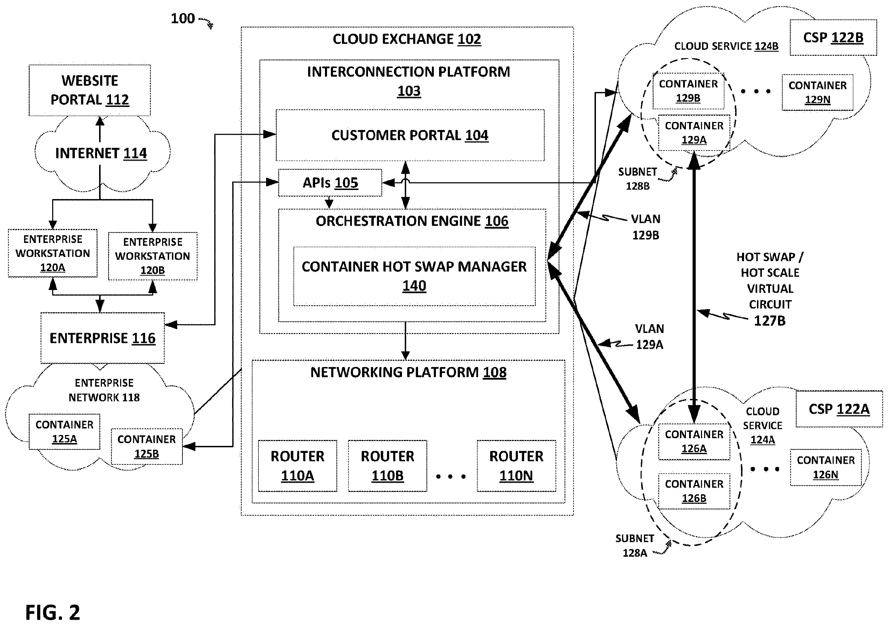

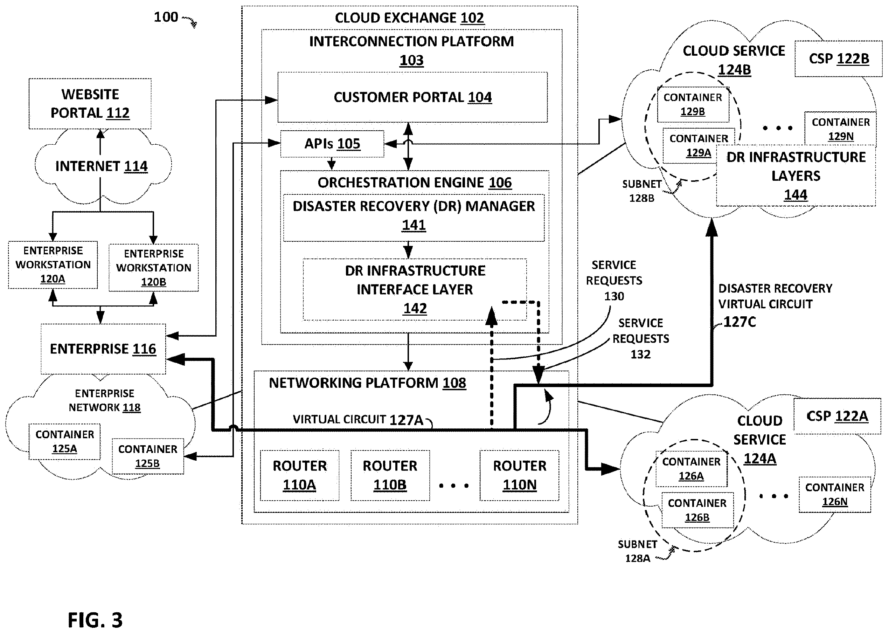

Networking platform 108 may comprise a plurality of routers and switches 110A-110N (collectively, "routers 110"), where "N" represents any number of routers and switches. Networking platform 108 may use routers 110 to transfer data between and among enterprise 116 and cloud services 124A-124B. Orchestration engine 106 may administer the operations of networking platform 108 to facilitate the dynamic creation of private connections between enterprise 116 and cloud services 124A-124B. In the example of FIG. 1, orchestration engine 106 may provision a virtual circuit 127A in the form of a virtual local area network (VLAN)-based or Internet Protocol-Virtual Private Network (IP-VPN)-based connection, for instance, between enterprise 116 and the CSP 122A network to allow for data transfer between enterprise 116 and CSP 122A. Virtual circuit 127A may represent an L2 connection or an end-to-end L3 connection, for instance. Virtual circuit 127A may include a VLAN between cloud service 124A and networking platform 108 operating over a physical cross-connect from the cloud service 124A network and a port of networking platform 108. In some cases, orchestration engine 106 may provision a hot swap virtual circuit 127B (shown in FIG. 2 and described below) to interconnect the respective networks of CSPs 122A and 122B. In some cases, orchestration engine 106 may provision a disaster recovery (DR) virtual circuit 127C (shown in FIG. 3 and described below) to interconnect the respective networks of CSPs 122A and 122B. Thus, in accordance with example techniques of this disclosure, orchestration engine 106 may act to facilitate secure, fast, and efficient connections and services between the networks of enterprise 116 and cloud service providers 122.

In accordance with example techniques of this disclosure, cloud exchange 102 may facilitate communications between two containers executing at different networks connected to cloud exchange 102. For example, cloud exchange 102 may facilitate communications between container 125A executing at enterprise 116 and container 126A executing at a network of CSP 122A providing cloud service 124A. Cloud exchange 102 may also facilitate inter-container communications between containers of two different cloud services, e.g., containers 126 executing at a network of CSP 122A providing cloud service 124A and containers 126 executing at a network of CSP 122B providing cloud service 124B, including inter-container communications for hot swaps and hot scaling, as described further below. Facilitating communication between different cloud services may include orchestration engine 106 provisioning a hot swap virtual circuit 127B to interconnect the respective networks of CSPs 122A and 122B, including for hot swapping and hot scaling services and for DR services, as described further below with reference to FIGS. 2 and 3, respectively.

FIG. 2 is a block diagram illustrating an example system in accordance with example techniques of this disclosure. As in FIG. 1, cloud exchange 102 may facilitate virtual connections for cloud services delivery with hot swap and hot scaling capability from multiple cloud service providers to one or more cloud service customers. Cloud exchange 102 includes orchestration engine 106 that performs hot swaps and hot scaling of containers and applications executing in the containers, particularly between containers of different CSPs, e.g., CSPs 122A, 122B. Orchestration engine 106 may enable cloud exchange 102 to operate connections, e.g., VLANs 129A, 129B, with CSPs 122A, 122B. Orchestration engine 106 may thereby implement a high-bandwidth hot swap virtual circuit 127B between CSPs 122A, 122B. Orchestration engine 106 may use hot swap virtual circuit 127B to facilitate hot swaps and hot scalings between the containers of CSPs 122A and 122B.

To implement communication between the containers of CSPs 122A and 122B, cloud exchange 102 may receive, from the respective CSP 122, for each container, a container identifier for identifying the container, and a network address for identifying a host executing the container. In one example, container 126A in CSP 122A may generate a data communication to be directed by cloud exchange 102 to container 126D in CSP 122B, such that the data communication has a particular container identifier and is executed by a particular host within cloud service 124B. This data communication may be forwarded as Layer 2 and/or Layer 3 (L2/L3) traffic by cloud service 124A to routers 110 of networking platform 108. Orchestration engine 106 may coordinate the operations of networking platform 108 such that routers 110 may forward the data communication to cloud service 124B, such that the data communication is directed to the host executing container 126D within cloud service 124B. In some examples, the cloud exchange 102 may switch traffic from container 126A in CSP 122A to container 129A in CSP 122B by changing the mapping between a cloud exchange address and container host addresses in the different CSPs 122A, 122B.

Containers 126 of the various CSPs 124 may register, via APIs 105, with orchestration engine 106 to provide respective container registration data including, e.g., host network address data and container identification data. The container registration data for a selected container, including a host network address for the container and a container identifier for the container, may also be referred to as a registration handle. Using the container registration data, orchestration engine 106 may facilitate inter-container communications and hot swap / hot scaling capability between containers 126 of the different CSPs 124, as well as potentially other functions such as a backup service, a disaster recovery service, and/or other services.

For example, orchestration engine 106 may send a container registration handle obtained from container 126A in CSP 122A to container 129A in CSP 122B. Orchestration engine 106, in conjunction with container 126A deployed to cloud service 124A, in this way extends network connectivity over hot swap virtual circuit 127B from container 126A in CSP 122A to container 129A in CSP 122B and may enable CSP 122A to use the container registration handle of container 126A to directly address and send data to container 129A of CSP 122B via virtual circuit 127B. Likewise, orchestration engine 106 may, using the container registration handle of container 126A, enable directly addressing and sending data from container 126A in CSP 122A to container 129A in CSP 122B via virtual circuit 127B. In some examples in a hot swap or hot scaling process, orchestration engine 106 may indicate a URI of the second container 129A in association with the first container 126A, to implement redirecting all application traffic, data, or other interactions (in a hot swap) or at least some application traffic, data, or other interactions (in a hot scaling) addressed to the first container 126A to the second container 129A.

Using such extended network connectivity, cloud exchange 102 may in some instances facilitate hot swap and hot scaling functions for applications executed using containers 126 in CSPs 122A, 122B. For example, hot swap manager 140 of orchestration engine 106 may associate a first container 126A of cloud service 124A with a second container 129A of a different cloud service 124B, and cause first container 126A to communicate all or part of its application code, data, and state to second container 129A in the second CSP 122B for purposes of a hot swap or hot scaling. Hot swap manager 140 of orchestration engine 106 may associate or register the container registration handle for the second container 129A in the second CSP 122B with the first container 126A in the first CSP 122A via cloud exchange 102, such that interactions addressed to first container 126A in CSP 122A may be communicated to second container 129A in CSP 122B. In some examples, hot swap manager 140 may first identify a need, potential benefit, or fulfillment of a criterion for performing a hot swap or hot scaling of container 126A in first CSP 122A, and may then direct the creation of one or more new containers (potentially including second container 129A) in the different CSP 122B, before proceeding with a hot swap or hot scaling of container 126A to the new one or more containers in the second CSP 122B. Cloud exchange 106 may retrieve and temporarily store some or all of the code, data, and other state from container 126A in first CSP 122A, and deliver the code, data, and other state from container 126A to the new one or more containers (e.g., container 129A) in the second CSP 122B once the new one or more containers in the second CSP 122B are "spun up" or initiated and ready to commence functioning.

Hot swap manager 140 of orchestration engine 106 may thus swap the applications, runtime data, and other state from first container 126A in first CSP 122A to second container 129A in second CSP 122B, or scale the applications, runtime data, and other state from first container 126A in first CSP 122A across both first container 126A and container 129A in second CSP 122B, and potentially additional containers (e.g., containers 129B, 129N) in second CSP 122B. Hot swap manager 140 of orchestration engine 106 may thus swap or scale the applications, runtime data, and other state from first container 126A in first CSP 122A to one or more containers 126 in second CSP 122B while the applications continue running without interruption, and with necessary functions of the swapping or scaling performed by container hot swap manager 140 of orchestration engine 106. Orchestration engine 106 may thus hot swap and/or hot scale containerized applications across different CSPs to potentially reduce management of the swapping and/or scaling by the customer.

In some instances, a customer or other user, such as enterprise 116 or an agent thereof, may establish hot swap and hot scaling configuration settings or scheduling via customer portal 104. Hot swap manager 140 of orchestration engine 106 may then perform hot swaps or hot scaling in accordance with the customer-selected configuration settings or schedule, e.g., selected via customer portal 104. In some examples, orchestration engine 106 may detect that container 126A at CSP 122A has failed (e.g., due to a time-out or a software bug), and either customer-selected configuration settings or default settings may indicate for failed containers in a first CSP to be hot swapped to new containers in a second CSP. Some configuration settings or default settings may further include criteria for evaluating multiple container failures in one CSP, and criteria such that detecting signs of multiple failures in a first CSP triggers a hot swap or hot scaling from containers in the first CSP to containers in a different CSP. In these examples, hot swap manager 140 of orchestration engine 106 may then hot swap the failed container 125A or multiple failed containers in the first CSP to one or more new containers 129A-N at a second CSP 122B in accordance with the customer-selected configuration settings or the default settings.

In some examples, hot swap manager 140 may first direct the creation of one or more new containers 129A-N in a second CSP 122B to be able to hot swap one or more containers 126A-C in the first CSP 122A to the one or more new containers 129A-N in second CSP 122B. Orchestration engine 106 may then redirect application traffic from containers of first CSP 122A to corresponding hot swap or hot scaled containers in second CSP 122B, e.g., from container 126A in CSP 122A to container 129A in CSP 122B. For example, an API gateway that receives application requests for CSP 122A may be configured by orchestration engine 106 to redirect application traffic from container 126A to container 129A in CSP 122B, across virtual circuit 127B, in response to orchestration engine 106 determining that container 126A in CSP 122A has failed, or has become overloaded, or has met some other configured criterion indicating that container 126A would benefit from being hot swapped or hot scaled to a new container.

In other examples, orchestration engine 106 may detect that container 126A at CSP 122A is being overloaded by increased levels of application traffic, and either customer-selected configuration settings or default settings may indicate for overloaded containers in a first CSP to be hot scaled to new containers in a second CSP. In these examples, hot swap manager 140 of orchestration engine 106 may then direct orchestration engine 106 to hot scale the overloaded container 126A of CSP 122A to one or more additional containers in a different CSP 122B, such as new container 129A, in accordance with the customer-selected configuration settings or the default settings. In some examples, hot swap manager 140 may first direct the creation of one or more new containers at the second CSP 122B including container 129A to be able to hot scale container 126A in CSP 122A to the new containers in CSP 122B. Orchestration engine 106 may then redirect at least some application traffic from container 126A to the one or more new containers in CSP 122B including container 129A.

In some cases, hot swap manager 140 may copy and persist a state of container 126A to a container hot swap data store, e.g., by storing transactions or state data. As part of a hot swap or hot scaling function, hot swap manager 140 may push and copy the state of the first container 126A of the first CSP 122A to the second container of the second CSP 122B, e.g., container 129A, such that, e.g., second container 129A of second CSP 122B may take over and seamlessly transition execution of the applications from the first container 126A of first CSP 122A. In some examples, orchestration engine 106 may dynamically create virtual circuit 127B between first CSP 122A and second CSP 122B to enable communications between containers 126A-N executed by first CSP 122A and containers 129A-N executed by second CSP 122B. Although illustrated as a separate virtual circuit 127B, virtual circuit 127B may represent an extension of underlying virtual circuit elements (e.g., Virtual Local Area Networks (VLANs) 129A, 129B or an Internet Protocol-Virtual Private Network (IP-VPN) shared in common), thereby enabling containers 126A-C executed by first CSP 122A to exchange data with containers 129A-N executed by second CSP 122B as well as with orchestration engine 106.

In some examples, container hot swap manager 140 receives state from a primary container 129A executing in cloud service network 124B. The state is usable by container hot swap manager 140 to replicate, to another container, at least one of the operating environment provided by container 129A (e.g., a container image), one or more applications executed by the container 129A, a transaction being performed by the container 129A, and/or an operating state of the container 129A and the one or more applications. In some cases, container hot swap manager 140 may receive a container registration handle from the container 129A via APIs 105 and request state from the container 129A. In some cases, container 129A (e.g., using a network module described herein) sends the state to container hot swap manager 140 autonomously. In some cases, an application executed by container 129A or another container of cloud service 124B may send the state to container hot swap manager 140.

Container hot swap manager 140 may store the state to an in-memory data store or other database or data store of the cloud exchange 102. The database may include, for instance, a Redis data structure store. Container hot swap manager 140 may be configured to hot swap or hot scale a primary container 129A executing in cloud service provider network 122B to a cloud service provider network 122A. For example, an enterprise 116 may request, using customer portal 104 or via APIs 105, that cloud exchange 102 provide a hot swap or hot scaling service for container 129A using cloud service 124A. Customer portal 104 may present a portal interface by which enterprise 116 may configure identifying information for container 129A (e.g., a URI or container registration data as described herein) and also may select cloud service 124A to support the hot swap or hot scaling service.

In response to a hot swap or hot scaling event, container hot swap manager 140 "stands up," "spins up," or establishes a new secondary container 126A in cloud service 124A for primary container 129A in cloud service 124B to provide an operating platform for a workload previously being executed by primary container 126D. For example, container hot swap manager 140 may configure a new container in cloud service 124A. Container hot swap manager 140 may also use an existing container in cloud service 124A. In some cases, container 126A has registered a container registration handle with container hot swap manager 140. A hot swap or hot scaling event may include a request from enterprise 116, a message from container 129A indicating failure or overloading of the container 129A, a triggering of a policy rule of cloud exchange 102, or other event that causes container hot swap manager 140 to stand up a new secondary container to support primary container 129A.

To stand up the new secondary container 126A, container hot swap manager 140 sends state data from container 129A and stored by container hot swap manager 140 to container 126A, which uses the state data to replicate the operating environment of primary container 129A. As such, the operating environment of secondary container 126A may process workloads previously processed by primary container 129A.

Container hot swap manager 140 may configure network platform 108 to redirect workloads from enterprise 116, previously directed to primary container 129A, to secondary container 126A. Enterprise 116 may direct requests, via virtual circuit 127A configured in networking platform 108 (as shown in FIG. 1), to containers to execute a workload. Container hot swap manager 140 may configure routing information in routers 110 or network address translation (NAT) mapping in a NAT device (not shown) to cause requests directed for primary container 126A to be forwarded by network platform 108 to secondary container 129A. In some cases, e.g., a NAT mapping may be configured to cause the NAT device to rewrite a destination network address for packets that include a request from enterprise 116 to a network address of a host for secondary container 129A instead of a network address of a host for primary container 126A. In some cases, container host swap manager 140 may reconfigure a Domain Name Service (DNS) record to cause redirects of requests to secondary container 129A.

Secondary container 129A may satisfy the request and, if necessary, return results to enterprise 116 via virtual circuit 127A. In this way, hot swaps and hot scalings may be transparent to enterprise 116.

In some examples, enterprise 116 may purchase service licenses for cloud services 124 from CSPs 122. In some examples, each service license may grant enterprise 116 permission to register and deploy a number of containers on the cloud service provided by the CSP. For example, enterprise 116 may purchase a license to deploy fifty containers on cloud service 124A. Similarly, enterprise 116 may purchase a license to deploy twenty containers on cloud service 124B. Orchestration engine 106 may register the licenses enterprise 116 has to deploy the selected numbers of containers in each cloud service, and may perform hot swaps or hot scaling in the context of deploying, creating, and managing up to the selected numbers of containers in each of the cloud services 124.

Thus it may be seen that a system in accordance with example techniques of this disclosure may enable a cloud exchange to hot swap and hot scale containers within a private or public network or across different private or public cloud services or networks. Such a system in accordance with example techniques of this disclosure may direct workflows from a first container in a first CSP to one or more additional containers in a second CSP, either instead of or in addition to the first container, for hot swaps and hot scaling, respectively. Such a system in accordance with example techniques of this disclosure, e.g., a hot swap manager of an orchestration engine of a cloud exchange, may also in some cases store a unique container identifier for each container, and in some cases store a unique registration handle for each container that combines the network address and the unique container identifier for each container.

A system in accordance with example techniques of this disclosure may copy all of the state (for a hot swap) or a portion of the state (for a hot scaling) from the first container to the one or more additional containers, where the copied state may include any current instruction pointers, application data, application stack configuration data, microservice state, memory data, commands, process information, current data store pointers, and/or any other code, data, instruction pointers, or other state for one or more applications, a runtime, and any other resources executing in the first container, to the one or more additional containers. A system of this disclosure, e.g., an orchestration engine, may then cause application traffic bound for the original, primary, first container to be directed to the secondary swapped container or the scaled containers, such that the functions of the first container are performed by the swapped or scaled containers. Systems of this disclosure may thus enable cloud services to maintain more effective service to their customers by minimizing or quickly remedying interruptions to microservices or other applications provided by a particular container. Further, systems of this disclosure may further allow an enterprise using a cloud exchange to more effectively perform load balancing of the network, so as to avoid strain on one particular system, which may otherwise cause adverse performance and negatively impact the performance parameters or experience of the customer.

FIG. 3 is a block diagram illustrating an example system in accordance with example techniques of this disclosure for cloud exchange 102 to facilitate virtual connections for cloud services delivery with disaster recovery (DR) capability from one or more cloud service providers to one or more cloud service customers. In accordance with example techniques of this disclosure, for purposes of DR operations, cloud exchange 102 may facilitate communications between containers executing at an initial cloud service 124A and cloud exchange 102, between cloud exchange 102 and containers executing at a selected second cloud service 124B, and in some cases between the containers executing at the initial cloud service 124A and the containers executing at a selected second cloud service 124B. In particular, according to an example DR process of this disclosure, DR manager 141 of orchestration engine 106 executing at cloud exchange 102 may set up a DR infrastructure interface layer 142 at orchestration engine 106 and provision DR infrastructure layers 144 in selected second cloud service 124B. DR infrastructure interface layer 142 may include one or more microservices and may represent or execute an API gateway.

In some cases, prior to detecting an indication of a disruption in the initial cloud service, DR manager 141 configures a DR infrastructure interface layer 142 for enterprise 116 according to configuration settings for enterprise 116 disaster recovery. The pre-configured DR infrastructure interface layer 142 may include (or expose) API endpoints to receive service requests 130 from enterprise 116. As a result, rapidly or immediately after detecting an indication of the disruption in the initial cloud service, DR recovery manager 140 may cause, by configuring network platform 108, service requests 130 to be directed to pre-configured DR infrastructure interface layer 142. This "circuit breaker" approach ensures that service requests 130 are not forwarded to a failed cloud service 124A and instead are buffered by DR infrastructure interface layer 142. DR manager 141 of cloud exchange 102 may thus buffer or temporarily store incoming service requests, prior to the disaster recovery infrastructure layers in the containers of the second cloud service being operational to handle the service request. DR manager 141 of cloud exchange 102 may thereafter send the buffered service requests to the second cloud service, in response to determining that the disaster recovery infrastructure layers in the containers of the second cloud service are operational to handle the service requests.

DR manager 141 may also provision virtual circuits (e.g., virtual circuit 127C) for direct data communications between the initial cloud service 124A and DR infrastructure interface layer 142 and between DR infrastructure interface layer 142 and the selected second cloud service 124B. For example, DR manager 141 may provision a VLAN for a physical cross-connect between the cloud service 124B network and network platform 108 for exchanging data communications between interconnection platform 103 and the cloud service 124B network. As another example, DR manager 141 may provision a VLAN for a physical cross-connect between the cloud service 124A network and network platform 108 for exchanging data communications between interconnection platform 103 and the cloud service 124A network.

Although illustrated as a separate virtual circuit 127C, virtual circuit 127C may represent an extension of virtual circuit 127A (e.g., a Virtual Local Area Network (VLAN) or an Internet Protocol-Virtual Private Network (IP-VPN) shared in common), thereby enabling enterprise network 118 to exchange data with selected second cloud service 124B as well as with first cloud service 124A.

DR manager 141 may then copy the code and state from the containers of the first cloud service, e.g., the current container state of a container with its configuration along with an application or service running inside the container, from containers 126A-N of cloud service 124A, while DR manager 141 provisions DR infrastructure layers 144 in containers of the selected second cloud service, e.g., in containers 129A-N of cloud service 124B. DR manager 141 may then communicate the code and state it had copied from containers 126AN of cloud service 124A to containers 129A-N of the newly provisioned DR infrastructure layers 144 of cloud service 124B. The applications, microservices, functions, processes, and instructions that had been executing on containers 126A-N of cloud service 124A may then resume executing on containers 129A-N of cloud service 124B, in containers that may have the same state and configuration as the corresponding containers from the first cloud service. Containers 129A-N of cloud service 124B may thus function as replicated copies of the original containers 126A-N of the initial cloud service 124A.

Provisioning or implementing DR infrastructure interface layer 142 may involve DR manager 141 installing instances of application code and data for a DR infrastructure interface layer on orchestration engine 106. In addition, DR manager 141 may configure networking platform 108 to direct service requests 130 from enterprise network 118 to the DR infrastructure interface layer 142. For example, DR manager 141 may configure a router 110A to direct service requests 130 sourced by enterprise network 118 and addressed to or destined for an endpoint of cloud service 124A (e.g., as indicated by host/domain URIs for the service requests and/or by a destination IP address for the service requests that indicates a host within subnets 128) to DR infrastructure layer 142. In some cases, DR manager 141 may configure a virtual routing and forwarding instance (VRF) or other virtual router of router 110A to direct all traffic, including service requests 130, on virtual circuit 127A and destined for subnets 128 to DR infrastructure interface layer 142. Networking platform 108 may intercept the service requests 130 from virtual circuit 127A and direct the service requests 130 to DR infrastructure interface layer 142. In various examples, DR manager 141 may update routes to the containers 126 of the first cloud service 124A with routes to the containers 129 of the DR infrastructure layers 144 in a routing table of the orchestration engine 106, subsequent to communicating the code and state to the DR infrastructure layers 144 in the containers 129 of the second cloud service 124B.

Each of service requests 130 may represent an HTTP Request that, e.g., includes a JavaScript Object Notation (JSON) or XML body that specifies parameters defined for a RESTful API endpoint exposed by the DR infrastructure interface layer 142 (and by the interface of the enterprise application originally executing on cloud service 124 on which the DR infrastructure interface layer 142 is based).

DR infrastructure interface layer 142 may queue service requests 130 until DR manager 141 determines DR infrastructure layers 144 are operational to handle service requests 130, at which time DR infrastructure interface layer 142 may output service requests 132 (which are substantively identical to respective service requests 130) to the cloud service 124B operating as a backup/DR cloud service for failed cloud service 124A. DR infrastructure interface layer 142 may inject service requests 132 on DR virtual circuit 127C to cloud service 124B. To enable injection of service requests 132 in this manner, DR manager 141 may configure network platform 108 to receive data traffic from DR infrastructure interface layer 142 and forward the data traffic to the requisite destination in cloud service 124B as indicated in service requests 132. In some cases, networking platform 108 may perform network address translation (NAT) to cause service requests 132 to be forwarding by networking platform 108 to subnet 128B via DR virtual circuit 127C.

Provisioning DR infrastructure layers 144 in containers of the selected second cloud service may involve DR manager 141 installing application code and data on a requisite number of selected containers in the selected second cloud service with a mapped layout and other features replicated from the containers of the first cloud service and with a virtual circuit connection to DR infrastructure interface layer 142.

DR manager 141 may map the layout of the entire network of the initial cloud service 124A, and provision the DR infrastructure layers 144 with the same network layout in the selected second cloud service 124B. DR manager 141 may set up the DR infrastructure layers 144 in the second cloud service 124B with all of the same functions, features, and topology of the initial cloud service 124A. This may include DR manager 141 replicating a template-driven workflow, virtual machines (VMs), images, gateways, forwarding engines, libraries, and any other salient features of initial cloud service 124A.

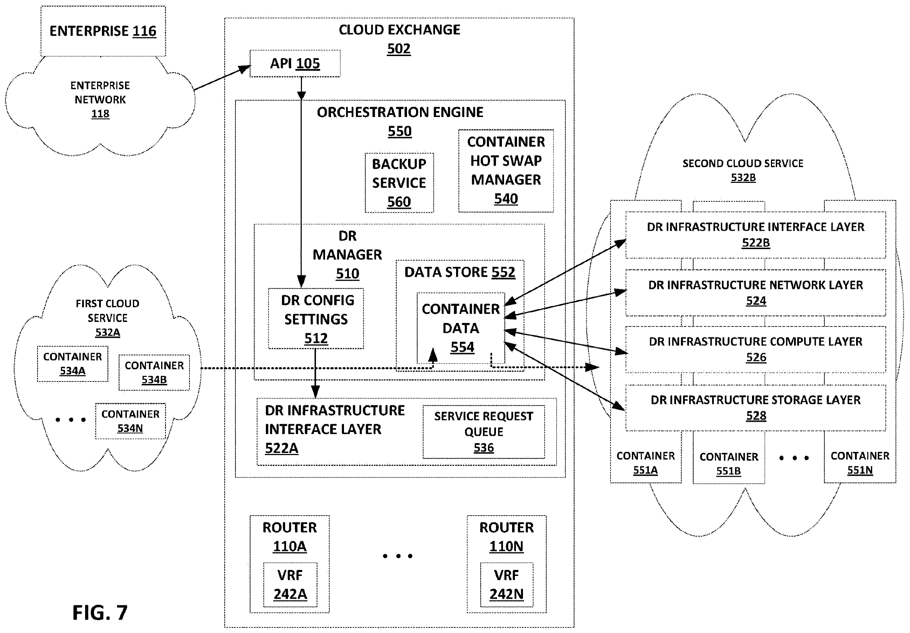

DR manager 141 may manage setup of various DR infrastructure layers 144 of a DR infrastructure at the selected backup cloud service 124B selected to host the DR infrastructure back-end. The temporary DR infrastructure interface layer 142 may in some cases act as a virtual cloud between the initial cloud service 124A and the second cloud service 124B, built on top of orchestration engine 106 of cloud exchange 102. DR infrastructure layers 144 may include an interface layer, a network layer, a compute layer, and a storage layer implemented in containers in the selected second cloud service 124B, as described further below with respect to FIG. 7.

For example, the customer may initially operate a data storage service based in containers in a cloud service provided by a specific cloud service vendor in a specific region. When cloud exchange 102 detects a disaster indication and performs a DR process, cloud exchange 102 moves the functions and state of the initial data storage service to a new set of containers in a new cloud service, which may be in a second region and/or provided by a second cloud service provider. Cloud exchange 102 may coordinate inter-container communications to move code and state between containers, including images of executing containers, complete with mid-process images of processes and other pending state that are running inside the containers, e.g., a NoSQL data store for the customer's data storage service. Cloud exchange 102 may initially hold the pending state in an in-memory data store or other memory or data resource at the first cloud service while cloud exchange 102 progresses through a read or upload of the code and state.

To implement communication between containers of the initial cloud service, DR manager 141, and the selected second cloud service, orchestration engine 106 of cloud exchange 102 may register some or all of the containers in the initial cloud service 124A and assign each container a container identifier for identifying the container, and a network address for identifying a host executing the container. The container registration data for a selected container, including a network address for the container and a container identifier for the container, may also be referred to as a registration handle. Using the container registration data, orchestration engine 106 may facilitate inter-container communications and DR capabilities to enterprise 116.

In one example, container 126A may generate data for consumption by an application executing on container 126A, after orchestration engine 106 has initiated a DR process. DR manager 141 reads that data, the code for that application, and other state such as processes and instruction pointers involved in execution of the application, from container 126A in association with a container identifier and a network address of container 126A via Layer 2 and/or Layer 3 (L2/L3) communication from cloud service 124A via routers 110 of networking platform 108. DR manager 141 stores that data and other state and that code from container 126A in association with the container identifier and the network address of container 126A, at least until after a DR infrastructure layers 144 have been provisioned and are up and running at the selected second cloud service.

As part of DR manager 141 provisioning the DR infrastructure layers 144 and getting the DR infrastructure layers 144 up and running at the selected second cloud service 124B, DR manager 141 communicates the data and other state and the application code from container 126A to one of the containers of the second cloud service 124B, e.g., to container 129A. DR manager 141 may effectively replicate the first container 126A from the first cloud service 124A in the second container 129A of the second cloud service 124B. DR manager 141 may associate the container identifier and the network address of the first container 126A of the first cloud service 124A with a container identifier and a network address of the second container 129A of the second cloud service 124B, communicate code and state from the first container 126A to the second container 129A based on the association. DR manager 141 may subsequently redirect cloud service traffic in the form of communications and application flows addressed to a URL or other URI for resources at the first container 126A to the second container 129A in the DR infrastructure layers 144.

For example, an API gateway that receives application requests for enterprise 116 may be configured to redirect application traffic from container 126A at first cloud service 124A to container 129A at second cloud service 124B in response to the redirect information provided by DR manager 141 of orchestration engine 106. As another example, routers 110 of networking platform 108 may be configured to redirect application traffic from container 126A at first cloud service 124A to container 129A at second cloud service 124B. For instance, router 110A may be configured to send application traffic addressed to subnet 128A via DR virtual circuit 127C to subnet 128B of cloud service 124B. In some cases, router 110A or a NAT device of networking platform 108 may translate destination addresses for the application from subnet 128A to subnet 128B. In some cases, a networking platform 108 or an API gateway is configured to rewrite a URI for application traffic sent to cloud service 124A to instead be directed to cloud service 124B.

In this way, external resources (such as those of enterprise network 118) can continue interacting with the resources originally hosted at first container 126A and now hosted at second container 129A in a DR infrastructure without having to be notified to address those interactions to a new URI or other host network address. Orchestration engine 106 may thus coordinate the operations of networking platform 108 such that routers 110 may forward communications addressed to container 126A instead to cloud service 124B, where they may be directed to the host executing container 129A of the DR infrastructure layers 144 within cloud service 124B, such that container 129A functions as a replicated substitute for container 126A. If there are containers in the initial cloud service 124A that have not yet been copied, or fully copied, by DR manager 141 when the DR infrastructure layers 144 are up and running at the second cloud service 124B, DR manager 141 may copy or continue copying the code and state, or the remaining code and state, from those containers of the initial cloud service 124A to containers of the DR infrastructure at the second cloud service 124B.

Orchestration engine 106 may thus perform a DR process on containerized applications without requiring any active effort or management of the DR process by a customer or user. In some cases, the DR process may be entirely transparent to enterprise 116, for instance. Orchestration engine 106 may cause the replicated containers of the DR infrastructure at the second cloud service to resume operations of the original containers, including resuming pending operations in "mid-stream" or from the complete set of pending processes, instruction pointers, and other mid-operation state of the original containers as locked and copied in response to the initial disruption. End users of the customer's services may thus continue interacting with those services with little or no interruption or change in user experience, regardless of the shift in the operations from one cloud service to another, and despite the disaster or other disruption affecting the original cloud service.

In some examples, enterprise 116 may purchase service licenses for cloud services 124 from CSPs 122. In some examples, each service license may grant enterprise 116 permission to register and deploy a maximum number of containers on the cloud service provided by the CSP. For example, enterprise 116 may purchase a license to deploy fifty containers on cloud service 124A, and to connect to those containers on cloud service 124A via a VLAN implementing virtual circuit 127A. The terms of the license may also include license for deployment of a similar fifty containers on one or more other available cloud services via a VLAN implementing virtual circuit 127C for purposes of a DR process in the event of a qualifying disruption that triggers a DR process. The other available cloud services may, for example, be cloud services in other regions provided by the same cloud service provider as the primary cloud service, or may be provided by other cloud service providers. Orchestration engine 106 may register the licenses enterprise 116 has to deploy the selected numbers of containers in each cloud service, in association with information for a customer account, and may perform a DR process in the context of deploying, creating, and managing up to the selected numbers of containers in each of the involved cloud services 124, potentially under different license terms for normal use and for temporary use in a DR process if needed.

In some instances, a cloud exchange may enable a customer or other user, such as enterprise 116 or an agent thereof, to initially or from time to time establish DR configuration settings, such as conditions or criteria qualifying as a disruption to trigger a DR process, via customer portal 104. The user-selected DR configuration settings may be associated with the user's customer account with cloud exchange 102, and may be entered or stored as DR configuration setting inputs to DR manager 141. DR manager 141 may expose the DR configuration setting options to a customer and receive the user selection inputs via an API. DR manager 141 may provide different DR configuration settings and DR workflow options for different DR scenarios. A DR workflow may include a set of steps or operations that define an order in which the various infrastructure layers of DR infrastructure layers 144 are brought up by DR manager 141. For example, a customer may configure a DR workflow to first bring up a storage layer for DR infrastructure layers 144, then a compute layer, then a network layer, and finally an interface layer in the DR infrastructure in the backup cloud service (separate from the temporary DR interface layer 142 of orchestration engine 106) to handle service requests from enterprise applications.

The DR configuration settings may include settings and rules for when or under what conditions DR manager 141 is to set up and tear down a DR infrastructure at a backup cloud service. DR manager 141 may also expose ongoing information about its activities on the customer's account to the customer to enable all DR process activity to be completely transparent to the customer, e.g., in a cloud exchange dashboard provided to interfaces provided to the customer, such as website portal 112 displayed at enterprise workstations 120.

DR manager 141 may store and track DR configuration settings for a potentially large number of customer accounts, potentially in association with other customer account information or customer account settings stored or tracked by other features of orchestration engine 106. DR manager 141 of orchestration engine 106 may then initiate and perform DR processes in accordance with the customer-selected configuration settings. This includes DR manager 141 performing the on-demand setup of a DR infrastructure, including DR infrastructure interface layer 142 and DR infrastructure layers 144 in accordance with the user-selected DR configuration settings associated with the customer account for the cloud service affected by the triggering disruption.

The cloud exchange thus provides on-demand setup of infrastructure for DR in the cloud. The cloud exchange detects failure or disruption of an initial cloud service, dynamically selects a second cloud service separate from the failed initial cloud service, and triggers set-up at the second cloud service of a complete DR infrastructure or DR environment that includes different DR infrastructure layers for different functions. The first layer of the DR infrastructure to be set up is an interface layer at the cloud exchange that functions as a virtual DR cloud service to copy and maintain all current operations in the initial cloud service, as soon as the cloud exchange detects a disaster state trigger, or other indication of a disruption in the initial cloud service.

The disruption in the initial cloud service may be caused by a power outage, a malware attack, a physical loss of one or more network nodes, a sudden overload by increased levels of application traffic or overwhelming increase in resource demand, or any other cause of disruption of the cloud service. The indication of the disruption may take the form of any type of detection of the aforementioned examples of disruptions via network or cloud service monitoring systems. The orchestration engine may also enable a customer to transmit a trigger to launch the DR process, potentially based on the customer's own internal functions or detection rules, or manually, such as in case of a human-in-the-loop confirmation of a disruption indication in DR monitoring tools exposed to the customer. The initial detection of the indication of the disruption in the initial cloud service and responsive initiation of the DR process may be analogized to a circuit breaker that may ensure that no data or operations of the first cloud service are lost in the immediate aftermath of an initial disaster or disruption of the first cloud service. That is, as soon as cloud exchange 102 detects the disruption, the DR infrastructure interface layer 142 at the cloud exchange 102 begins copying all current or pending requests, instructions, processes, and other pending state (e.g., including all incoming data and current state in the initial cloud service) from the containers of the first cloud service in a queue, during the process of the cloud exchange DR manager setting up the other layers of the DR infrastructure in the dynamically selected second cloud service.

The cloud exchange DR manager continues to set up the remaining layers of the DR infrastructure and initiate their functioning, eventually setting up the complete DR infrastructure in containers in the selected second cloud service. DR manager 141 sets up the DR infrastructure layers in pre-existing containers already executing and active at the second cloud service, to facilitate rapid replication of the original containers. DR manager 141 ensures that the code and pending state from the containers of the first cloud service are delivered to the DR infrastructure layers at the new cloud service for ongoing processing as the containers of the infrastructure layers become available to receive the code and state from the initial cloud service and to take over functions of the initial cloud service, such that all functions of the initial cloud service seamlessly resume functioning, including resuming execution of applications and microservices from mid-process where applicable, in the new cloud service, without failure of the functions of those applications and microservices. The containers of the DR infrastructure layers thus serve as replicated copies of the containers of the initial cloud service.

A system in accordance with example techniques of this disclosure may enable a cloud exchange to perform a DR process on containers across different private or public cloud services or networks. Such a system in accordance with example techniques of this disclosure may detect a qualifying disruption to a cloud service and respond by implementing a DR process. Such a system in accordance with example techniques of this disclosure, e.g., a DR manager of an orchestration engine of a cloud exchange, may provision a DR infrastructure interface layer at the orchestration manager of the cloud exchange. A system in accordance with example techniques of this disclosure, e.g., a DR manager, may copy the code and state from the containers of the initial cloud service, while the DR manager provisions a DR infrastructure on containers of a selected second cloud service. The copied state may include any data, instruction pointers, pending requests on microservices, and any other state for one or more applications, one or more microservices, a runtime, and any other resources executing in the containers.

Once the DR infrastructure is up and running on the containers of the second cloud service, a system of this disclosure, e.g., a DR infrastructure interface layer, may push or communicate service requests 132 (and in some cases the code and state from the DR infrastructure interface layer) to the containers of the DR infrastructure layers at the second cloud service. A system of this disclosure, e.g., an orchestration engine, may then cause application traffic bound for the network addresses of the original containers in the first cloud service to be redirected to the equivalent containers with the replicated code and state in the DR infrastructure in the second cloud service. The DR process performed by the orchestration engine of the cloud exchange thus provides for the applications, microservices, and other functions to resume operation on the containers of the DR infrastructure in the second cloud service, despite the disruption to the initial cloud service. Systems of this disclosure may thus enable cloud services to maintain more effective service to their customers by minimizing or remedying interruptions to their cloud-based operations due to disasters or other disruptions to their cloud service.

As one illustration of the techniques of the disclosure, an example Application Programming Interface (API) definition is provided for facilitating inter-container communications, via a cloud exchange, for containers executing at logically isolated networks. The following API is an example POST operation that, when executed by orchestration engine 106, provisions the virtual network for containers.

### REQUEST:

***Request URI:***
POST http://<HostName>/ecx/ {version}/overlaynetwork
***Filter Parameters:***
None
***Request Headers:***

| Header Attribute | Description |
|---|---|
| Authorization | Required. Specifies the Oauth Bearer token |

### REQUEST PARAMETERS:

***name_services***

| | |
|---|---|
| **Description** | Connection name |
| **Type** | String |
| **Required** | Yes |
| **Default** | None |
| **Example** | None |

***id***

| | |
|---|---|
| **Description** | Connection ID |
| **Type** | String |
| **Required** | Yes |
| **Default** | |
| **Example** | f7a6ae0574bbf62c42f539b50c8ebde0f728a253b6f |

***data center port***

| | |
|---|---|
| **Description** | Connection type |
| **Type** | String |
| **Default** | None |
| **Example** | ECX_Docker_Network |
| **Required** | Yes |

***subnet***

| | |
|---|---|
| **Description** | Subnet private IP details |
| **Type** | String |
| **Default** | None |
| **Example** | 172.17.0.1/16 |
| **Required** | No |

***gateway***

| | |
|---|---|
| **Description** | Gateway private IP details |
| **Type** | String |
| **Default** | None |
| **Example** | 172.17.0.1 |
| **Required** | no |

***container_ID***

| | |
|---|---|
| **Description** | Container ID |
| **Type** | String |
| **Required** | Yes |
| **Default** | None |
| **Example** | 3386a527aa08b37eab05a6b775fba7ddd40d8P92c |

***container_name***

| | |
|---|---|
| **Description** | Container name |
| **Type** | String |
| **Required** | Yes |
| **Default** | None |
| **Example** | container1 |

***provider***

| | |
|---|---|
| **Description** | VLAN (Provider) name [may be expressed as a VLAN identifier / |
| | tag] |
| **Type** | String |
| **Required** | Yes |
| **Default** | None |
| **Example** | Azure Express Route, AWS Direct Connect, Cloud Sigma |

***speed***

| | |
|---|---|
| **Description** | VLAN or connection speed |
| **Type** | string |
| **Required** | Yes |
| **Default** | None |
| **Example** | "up to 200, up to 500" |

***vlan***

| | |
|---|---|
| **Description** | VLAN id for the connection |
| **Type** | Number |
| **Required** | Yes |
| **Default** | None |
| **Example** | 456 |

***code***

| | |
|---|---|
| **Description** | Metro Code |
| **Type** | String |
| **Required** | Yes |
| **Default** | None |
| **Example** | SG |

***macAddress***

| | |
|---|---|
| **Description** | MAC address |
| **Type** | sting |
| **Required** | Yes |
| **Default** | None |
| **Example** | 02:42:ac:11:00:02 |

***port***

| | |
|---|---|
| **Description** | Docker port detail |
| **Type** | Number |
| **Required** | Yes |
| **Default** | None |
| **Example** | 8082 |

***ASN***

| | |
|---|---|
| **Description** | Private ASN detail |
| **Type** | Number |
| **Required** | No |
| **Default** | None |
| **Example** | None |

***BGP***

| | |
|---|---|
| **Description** | BGP connection details |
| **Type** | Sting |
| **Required** | Yes |
| **Default** | None |
| **Example** | None |

### RESPONSE:

```
      HTTP/1.1 200 OK
       Content-Type: application/json
       {[
         {
             "Name": "Docker Virtual Network",
             "Id": "f7a6ae0574bbf62c42f539b50c8ebde0f728a253b6f",
             "driver" : "ECX_Docker_Network",
             "AuthKey" : "12345ctyur569jfh"
             "IPAM": {
                    "driver": "default",
                    "Config": [
                          {
                          "Subnet": "172.17.0.1/16", "172.1.0.2/16"
                          "Gateway": "172.17.0.1"
                          }
                      ]
           },
           "Containers": [{
                    "Id":"3386a527aa08b37eab05a6b775fba7ddd40d8f92c",
                    "Name" :"container1",
                    "Provider" : "Azure"
                    "EndpointID": "647c12443e91f642abb60",
                    "Vlan":"102"
                    "vlanSpeed" : "1gpbs"
                    "MacAddress": "02:42:ac:11:00:02",
                    "IPv4Address": "172.17.0.2/16",
                    "IPv6Address": "",
                    "BGP" : "",
                    "ASN" : ""
                    "Port" : "8090"
             },
             {
                    "Id":" d40d8f92c3a6b775fua7dd386a527aa08b37eab05",
                    "Name" :"container2",
                    "Provider" : "AWS"
                    "EndpointID": "647c12443e91f642abb60dfab",
                    "Vlan":"103",
                    "vlanSpeed" : "1gpbs",
                    "MacAddress": "02:42:ac:11:00:FF02",
                    "IPv4Address": "172.1.0.2/16",
                    "IPv6Address": "",
                    "BGP" : "",
                    "ASN" : "",
                    "Port" : "8091"
                }
           ],
           "Options": {
             "default_bridge": "true",
             "enable_icc": "true",
             "MD5": "true",
             "data center port": "9001" // E.g., connect Enterprise to Cloud Exchange
                                              // networking platform
             }
          }
       ]
```

In the above example API, the request is an HTTP POST command to a uniform resource identifier (URI) that is an API 105 interface for provisioning virtual networks for containers. The body of the message contains one or more request parameters that specify the configuration options for the virtual network for containers. In one example, an administrator of enterprise 116 accesses customer portal 104 to access APIs 105 which transmit the request to orchestration engine 106 to request provisioning of a virtual network for containers. In another example, the administrator of enterprise 116 accesses APIs 105 directly to transmit the request to orchestration engine 106 to request provisioning of a virtual network for containers. In response to receiving the request URI, the orchestration engine 106 provisions a virtual network for containers. Further, the orchestration engine 106 transmits a response message, as depicted above, to enterprise 116 that indicates the successful provisioning of the virtual network as well as the specific configuration details for the provisioned virtual network. The body of the example Response provided above may be similar to the body of an example request, as provided above.

In another example, an administrator of enterprise 116 accesses APIs 105, either through customer portal 104 or directly, to establish configuration settings, such as detection and performance criteria, for triggering and performing hot swaps and/or hot scaling or disaster recovery of containers. In another example in which container 126A in cloud service 124A has been hot swapped or replaced for disaster recovery with container 129A in cloud service 124B, orchestration engine 106 may configure an API gateway to redirect application requests or other cloud service traffic from enterprise network 118 for resources in container 126A to container 129A, either across virtual circuit 127B or virtual circuit 127C from cloud service 124A or via VLAN 129B from cloud exchange 102.

In the above example API, the "*name_services*" parameter specifies the connection name. This parameter is provided as a string. In the above example response, the "*name_services*" parameter has set the name of the virtual network to be "Docker Virtual Network."

In the above example API, the "*id*" parameter specifies an identifier for the virtual network. In an example where enterprise 116 or orchestration engine 106 access multiple virtual networks, enterprise 116 and orchestration engine 106 may use the identification tag parameter to distinguish the origin of network traffic received from each virtual network.

In the example above API, the "*driver*" parameter indicates the type of connection being requested, here, a "ECX_Docker_Network" to indicate a virtual network for containers, in accordance with techniques described herein.

In the above example API, the "*data center port*" parameter in the options substructure specifies a data port through which enterprise 116 communicates with the virtual network. This parameter may be an integer specifying the actual port of the cloud exchange (e.g., "9001"), where the port represents an interface port of a switch or panel for accessing the cloud exchange networking platform 108.

In the above example API, the "*subnet*" parameter specifies a subnet of containers on a CSP. For example, and with reference to FIG. 1, the "*subnet*" parameter may specific a subnet 128A on CSP 122A that includes containers 126A-126B. Each subnet is specific to a particular CSP 122, and each subnet 128 may contain one or more containers 126 executing on hosts within the CSP 122. However, a virtual network as described herein multiple subnets belonging to different CSPs. For example, a single virtual network may include both subnet 128A of CSP 122A and subnet 128B of CSP 122B.

In the above example API, the "*gateway*" parameter specifies an address of a gateway or edge router of enterprise 116 that exists between the enterprise network 118 and the cloud exchange 102. Orchestration engine 106 routes traffic destined to enterprise 116 from the virtual network to this gateway address.

The following parameters may be included in descriptive data for containers, as a structured container object in a list of "Containers." Description data for containers may represent container registration data.

In the above example API, the "*container_ID*" parameter specifies a unique identifier for a provisioned container. Enterprise 116, orchestration engine 106, CSPs 122, and other containers 126 may use the container ID to communicate with, manage, or configure the corresponding container.

In the above example API, the "*container_name*" parameter specifies a human-readable name for a provisioned container. Enterprise 116, orchestration engine 106, CSPs 122, and other containers 126 may use the container ID to communicate with, manage, or configure the corresponding container.

In the above example API, the "*provider*" parameter specifies a CSP 122 for hosting a container requested to be provisioned by enterprise 116. In some examples, the provider is specified to be one of Azure Express Route, AWS Direct Connect, Cloud Sigma, and the like.

In the above example API, the "*speed*" parameter specifies a connection speed for the virtual network. In some examples, the "*speed*" parameter sets a maximum connection speed for the network.

In the above example API, the "*vlan*" parameter specifies a vlan identifier for enterprise 116. In some examples, orchestration engine 116 and CSPs 122 use the vlan identifier to route traffic exchanged between enterprise 116 and CSPs 122.

In the above example API, the "*code*" parameter specifies a region for the virtual network. In the above example, the "*code*" parameter "SG" specifies that the virtual network is to be provisioned in the Singapore region. In other examples, the "*code*" parameter specifies a city, zip code, county, state, province, country, or continent.

In the above example API, the "*macAddress*" parameter describes a MAC address for a host of a container. For example, enterprise 116 may use this parameter to request the MAC address for a host of a container. One of orchestration engine 106 or CSP 122 responds by providing the requested MAC address.

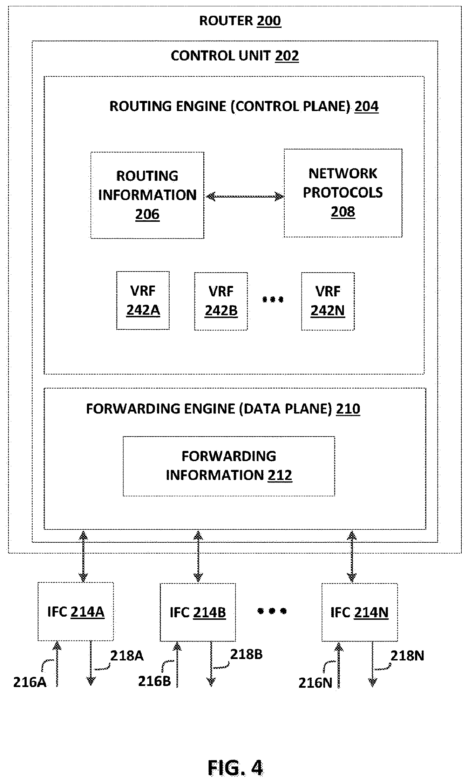

In the above example API, the "*port*" parameter describes a port for a container. In some examples, each container 126 executes on a host. For example, with reference to FIG. 4, described below, each container 306 executing on host 304 may have a unique host address + port combination or a unique network prefix/subnet + port combination that identifies the container in the cloud service provider network. Enterprise 116 may use this parameter to specify the port for a specific container. Alternatively, enterprise 116 may use this parameter to request the port for a specific container. One of orchestration engine 106 or CSP 122 responds by providing the requested port of the container.

In the above example API, the "*ASN*" and "*BGP*" parameters specify ASN and BGP parameters that the orchestration engine 106 should use for facilitating traffic between enterprise 116 and the provisioned virtual network.

The parameters specified in the above example API are for illustrative purposes only. The techniques of the disclosure may be implemented using the example API provided above, or with different parameters not expressly disclosed herein. For example, the techniques of the disclosure may be implemented using only a subset of the parameters described above, or may provision the virtual network for containers or perform hot swaps or hot scaling without using any of the parameters described above. Nothing in this disclosure should be construed so as to limit the techniques of this disclosure to the example API illustrated above. Specific techniques for the design and implementation of a virtual network for containers are described in U.S. Provisional Application No. 62/286,259 and U.S. Patent Application No. 15/228,471, the entire contents of both of which are incorporated by reference herein.

FIG. 4 is a block diagram illustrating an example router within a cloud exchange in accordance with one or more techniques of the disclosure. In general, router 200 may operate substantially similarly to routers 110A-1 10N in FIG. 1. In this example, router 200 includes interface cards 214A-214N ("IFCs 214") that may receive packets via incoming links 216A-216N ("incoming links 216") and send packets via outbound links 218A-218N ("outbound links 218"). IFCs 214 are typically coupled to links 216, 218 via a number of interface ports. Router 200 also includes a control unit 202 that determines routes of received packets and forwards the packets accordingly via IFCs 214. Routing engine 204 also includes virtual routing function units (VRFs) 242A, 242B, ... 242N ("VRFs 242"), which may be representative of any number of VRFs within the limits of engineering. Each VRF 242 may be implemented on the hardware of router 200 but virtualize the routing and forwarding functions of router 200.

Each VRF 242 may be associated with or dedicated to a different cloud service 124, and may be associated for interconnecting a specific cloud service 124 with a specific enterprise 116 or other customer or user. VRFs 242 may be configured for interconnecting respective cloud service 124 with specific enterprises 116 or other customers or users by cloud exchange 102. VRFs 242 may be configured with routes for layer 3 subnets that include host addresses identified by URLs or other URIs or network addresses that uniquely identify the microservices or other applications in the containers for DNS purposes.

In some examples, DR manager 141 may, at or near the conclusion of a DR process, implement a changeover of VRFs 242 in router 200, e.g., in networking platform 108 of cloud exchange 102, by modifying a mapping table in routing engine 204 to reassign the application flow for a first VRF 242A configured to direct traffic to the initial cloud service, to a second VRF 242B configured to direct traffic to the DR infrastructure layers at the second cloud service. DR manager 141 may configure VRF 242B with a network address table associating the URLs or other network addresses of the microservices and other applications from the containers of the initial cloud service to the network addresses and container identifiers of the replicated copies of those microservices and other applications installed and executing on the replicated containers of the DR infrastructure layers of the second cloud service. Traffic addressed to the URLs or other network addresses of the microservices and other applications from the containers of the original cloud service are thus automatically directed to the replicated containers of the DR infrastructure layers at the second cloud service, without the URLs or other network addresses being changed, and without the packets of the application traffic needing to be rewritten.

Control unit 202 may comprise a routing engine 204 and a packet forwarding engine 210. Routing engine 204 operates as the control plane for router 200 and includes an operating system that provides a multi-tasking operating environment for execution of a number of concurrent processes. Routing engine 204, for example, may execute software instructions to implement one or more network protocols 208. For example, network protocols 208 may include one or more routing and switching protocols, such as Border Gateway Protocol (BGP), Multi-protocol Label Switching (MPLS), Virtual Private LAN Services (VPLS), Ethernet Virtual Private Networking (EVPN), or Provider Backbone Bridging EVPN (PBB-EVPN) for exchanging routing information with other routing devices and for updating routing information 206. Routing information 206 may describe a topology of the cloud exchange in which router 200 resides, and may also include routes through the shared trees in the computer network. Routing information 206 describes various routes within the computer network, and the appropriate next hops for each route, i.e., the neighboring routing devices along each of the routes. Routing engine 204 analyzes stored routing information 206 and generates forwarding information 212 for forwarding engine 210. Forwarding information 212 may associate, for example, network destinations for certain multicast groups with specific next hops and corresponding IFCs 214 and physical output ports for output links 218. Forwarding information 212 may be a radix tree programmed into dedicated forwarding chips, a series of tables, a complex database, a link list, a radix tree, a database, a flat file, or any of various other data structures.

Forwarding information 212 may include lookup structures. Lookup structures may, given a key, such as an address, provide one or more values. In some examples, the one or more values may be one or more next hops. A next hop may be implemented as microcode, which, when executed, performs one or more operations. One or more next hops may be "chained," such that a set of chained next hops performs a set of operations for respective different next hops when executed. Examples of such operations may include applying one or more services to a packet, dropping a packet, and/or forwarding a packet using an interface identified by the one or more next hops. Router 200 may be configured, at least in part, by interconnection platform 103 as shown in FIGS. 1 and 2, including by container hot swap manager 140.

In accordance with techniques of this disclosure, router 200 may operate as one of routers 110 in the example of FIGS. 1 and 2. In one example, routing engine 204 may use routing protocols 208 to exchange routing information with each of a plurality of cloud services (e.g., cloud services 124) and store learned routes through cloud services 124 in routing information 206. Forwarding engine 210 may associate various subnets, such as subnets 128A and 128B, with various cloud services, such as cloud services 124A and 124B, respectively, and store this information in forwarding information 212. Router 200 may receive an L2/L3 data communication, which may, for example, originate from container 126A and be addressed for container 126D, along incoming links 216. Control unit 202 may parse the data communication for a network address (e.g., IP address) within subnet 128B and, based on forwarding information 212, forward the data communication toward subnet 128B, wherein container 126D may receive the forwarded communication. The network address may be associated with a first container that hot swap manager 140 has hot swapped or hot scaled, such that the network address is now associated with one or more additional containers, instead of or in addition to the original container. Hot swap manager 140 may also configure control unit 202 to address data communications to unique container identifications associated with a network address, such as in cases where alternative or additional containers (for hot swaps and hot scalings, respectively) have been assigned to the same network address as a first container. Forwarding engine 210 may transmit the data communication along outbound links 218 to subnet 128B within cloud service 124B, wherein container 126D may receive the data communication.

Accordingly, it may be seen that a router within a cloud exchange implemented according to techniques of this disclosure may receive a data communication from a first container within a first private network and transmit that data communication to one or more second containers which may be within the same first private network, within a second private network, or in a public cloud services network. Such a router may allow a container to exchange data between microservices or other applications executing on containers on the same or different private or public networks. Further, such a router may allow a private network to maintain more effective service to their customers by minimizing or remedying interruptions to a microservice or other application provided by a particular container. Further, such a router may allow a private network to more effectively perform load balancing of the network, so as to avoid strain on one particular system, which may otherwise cause adverse performance and negatively impact the performance parameters or experience of the customer.

The architecture of router 200 illustrated in FIG. 4 is shown for example purposes only. Techniques as set forth in this disclosure may be implemented in the example router of FIG. 4 as well as other types of routers not described specifically herein. In other examples, routers enabled to function in accordance with this disclosure may be configured in a variety of ways. In some examples, some of the functionality of control unit 202 may be distributed within IFCs 214. In some examples, control unit 202 may comprise a plurality of packet forwarding engines. Nothing in this disclosure should be construed so as to limit techniques of this disclosure to the example architecture illustrated by FIG. 4.

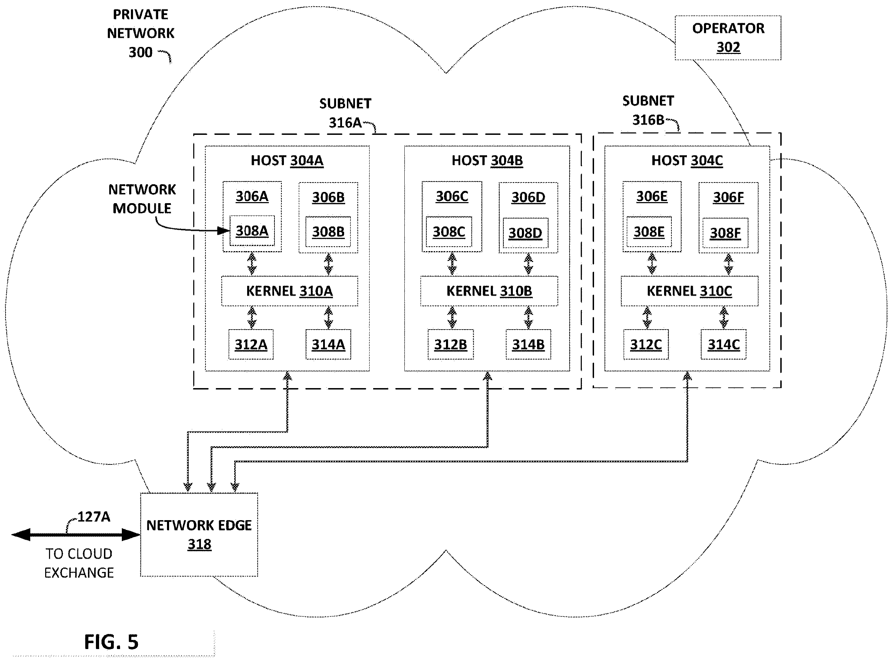

FIG. 5 is a block diagram illustrating an example private network configured in accordance with example techniques of this disclosure. In the example of FIG. 5, operator 302 may operate a private network 300 possessing computing resources by which one or more customers may execute a plurality of applications and microservices. In some examples, operator 302 may be an enterprise, such as enterprise 116 of FIGS. 1 and 2. In some examples, operator 302 may be a CSP, such as an operator for any of CSP 122A or CSP 122B of FIGS. 1 and 2. In some examples, private network 300 may be an enterprise network, such as enterprise network 118 of FIGS. 1 and 2. In some examples, private network 300 may be a cloud service, such as cloud service 124A or 124B of FIGS. 1 and 2. Private network 300 may comprise a plurality of hosts 304A, 304B, and 304C (collectively, "hosts 304"). In some examples, a host may be a server running on private network 300. In other examples, one or more hosts may be one or more virtual machines executed on one or more servers running on private network 300. Each of hosts 304 may have an IP address such that the host may be identified on private network 300. In some examples, a plurality of hosts may possess a plurality of IP addresses falling within an IP subnet, such as IP subnets 316A, 316B. Hosts 304 may communicate with network edge device 318, which may represent a router or L3 switch. Network edge device 318 may connect along virtual circuit 127A to a cloud exchange, such as cloud exchange 102 of FIGS. 1 and 2. In some examples, network edge router 318 may operate to forward messages between hosts 304 and cloud exchange 102.

Each host may execute one or more containers. In the example of FIG. 5, host 304A is configured to execute containers 306A and 306B, host 306B is configured to execute containers 306C and 306D, and host 304C is configured to execute containers 306E and 306F (collectively, "containers 306"). Containers 306 may operate in a similar fashion as and may represent any of containers 125 and 126 of FIGS. 1 and 2. Each host 304 may implement a specific kernel instance 310, common libraries 312, and kernel specific libraries 314. Each of the containers executed within a particular host share a kernel 310 and common libraries 312 (e.g., containers 306A and 306B of host 304A share kernel 310A and common libraries 312A). In one example, any of hosts 304 may execute the Docker container application for the Linux operating system, which in such examples are represented by containers 306 and kernel 310, respectively.

In some examples, each of the containers within the host may share the IP address of the host. In some examples, each container may be uniquely identified by a container ID or port ID. In some examples, the port ID of a container identifies a Transmission Control Protocol (TCP) port or a User Datagram Protocol (UDP) port. In the example of FIG. 5, containers 306A and 306B may share IP address 192.168.1.125 with host 304A. In this example, container 306A may be associated with port ID 5001 for the host 304A while container 306B may be associated with port ID 5002. In some examples, host 304A may forward traffic destined for TCP port 5001 to container 306A and forward traffic destined for TCP port 5002 to container 306B. According to example techniques of this disclosure, each of containers 306 may possess a network module 308, as described herein, to allow the container to communicate with cloud exchange 102. Orchestration engine 106 may communicate data for the network modules 308 to containers 306 to enable such responsive interaction of containers 306 with cloud exchange 102, and with container hot swap manager 140 in particular.

In some examples, an enterprise, such as enterprise 116 of FIGS. 1 and 2, may purchase or otherwise contract for a number of containers to be deployed within a cloud service, such as cloud service 124A. In some examples, enterprise 116 may create at least one application, such as a microservice. Each of containers 306 may provide an execution environment for the applications. In some examples, each of containers 306 may provide an execution environment for at least one unique application or microservice, while in other examples, each of containers 306 may provide redundant access to at least one application or microservice. In some examples, each customer of private network 300 may access a single container (e.g., container 306A). In some examples, a customer may have access to a plurality of containers (e.g., containers 306A, 306B, and 306C). In some examples, each container within a subnet may provide a particular suite of applications or microservices. In some examples, each container within a subnet may provide access to private network 300 to a particular customer or group of customers.

According to example techniques of this disclosure, containers 306 include respective network modules 308 extended to obtain and send, to a cloud exchange, container registration data including, e.g., network data and container identification data for the container. For example, container 306A includes network module 308A that obtains a network address for host 304A in subnet 316A and further obtains a container identifier for container 306A, the container identifier usable by the kernel 310A to identify container 306A from other containers executing on host 307A, such as container 306B. In some cases, the container identifier is a unique container identifier that distinguishes container 306A from all other containers in private network 300. In some cases, the container identifier is a networking port, such as a TCP or UDP port, that distinguishes container 306A from other containers executing on the host. In some cases, the container identification data includes both a unique container identifier and a networking port. In any of these cases, a unique container identifier and/or a networking port assigned to a particular container may be referred to generally as a container identifier.

Network modules 308 self-register the container registration data by invoking APIs 105 of cloud exchange 102 to send the container registration data. In this way, interconnection platform 103 of cloud exchange 102 receives container registration data by which interconnection platform 103 may, via a virtual circuit, send data communications to the corresponding container 306. For example with respect to container 306A, network module 308A may invoke APIs 105, via a virtual circuit 127A with cloud exchange 102, to send the container registration data for container 306A to interconnection platform 103.

Interconnection platform 103 may store container registration data for containers 306. Interconnection platform 103 may associate multiple containers in an association and send each container in the association container registration data for other containers in the association. As a result, a container in an association may use the container registration data to send data communications via a cloud exchange to another container in the association that is located in a different private network coupled to the cloud exchange.

According to example techniques of this disclosure, container 306A within private network 300 may communicate with a container within another private network connected to cloud exchange 102, such as container 129A within cloud service 124B. In this example, based on container registration data received from interconnection platform 103, container 306A may generate a data communication having a container identifier (e.g., a port) indicating the destination container (e.g., container 129A) and a network address (e.g., an IP address within a subnet 128B of CSP 122B) for a host that executes the destination container. Container 306A may output this data communication for transmission outside private network 300 via virtual circuit 127B or virtual circuit 127C to routers 110 of cloud exchange 102. As described above, orchestration engine 106 may operate networking platform 108 to forward the communication to the destination subnet of the appropriate cloud service (e.g., to subnet 128B of cloud service 124B). Cloud service 124B may direct the data communication to container 129A within subnet 128B. If container 129A responds with a second data communication, cloud service 124B may pass the second data communication to routers 110 of cloud exchange 102. Cloud exchange 102 may include networking platform 108 to redirect the second data communication to private network 300 along a communication link such as virtual circuit 127B or virtual circuit 127C.

Network edge device 318 may receive the second data communication from virtual circuit 127A/127B/127C and forward the data communication to the host having the IP address identified by the data communication (e.g., host 304A). In some examples, the destination IP address of second data communication may specify a TCP / UDP port of host 304A. Host 304A may pass the second data communication to the container having a port ID matching the TCP / UDP port of the destination IP address. Thus, it may be seen that a private network implemented according to example techniques of this disclosure may enable communication between a first container within a first private network connected to a cloud exchange and a second container within a second private network connected to the cloud exchange.

In some examples, container 306A may generate and send data representing a state of the container 306A to a cloud exchange for hot swapping or hot scaling using network module 308A.

The architecture of private network 300 illustrated in FIG. 5 is shown for example purposes only. Example techniques of this disclosure may be implemented in the example cloud service of FIG. 5, as well as other types of cloud services not described specifically herein. In other examples, private network 300 may be configured in a variety of ways. In some examples, private network 300 may implement various APIs, operating systems, hardware, or software that share a common communication protocol with the cloud exchange. In some examples, each cloud service of the cloud exchange may use a different communication protocol to exchange data with the cloud exchange, and the cloud exchange may act to facilitate or translate communications between cloud services using different communication protocols. Nothing in this disclosure should be construed so as to limit techniques of this disclosure to the example architecture illustrated by FIG. 5.

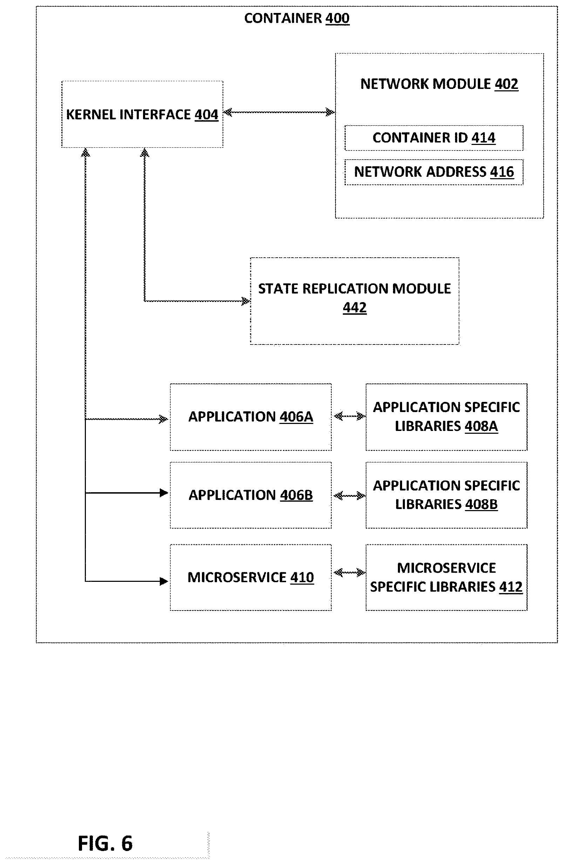

FIG. 6 is a block diagram illustrating an example container according to example techniques of this disclosure. Container 400 may be a virtualized container such as those provided by the Docker container technology for the Linux operating system. In some examples, container 400 may share an operating system and common libraries with other containers and the host kernel. In some examples, container 400 may send and receive data communications, control signals, and various other transmissions to and from the system kernel through kernel interface 404.

Container 400 includes state replication module 442. State replication module 442 may be installed on container 400 by orchestration engine 102 of FIGS. 1-3. State replication module 442 may be implemented as a supplemental microservice or other software module that executes on container 400. State replication module 442 configures container 400 to be receptive to a DR process command from orchestration engine 106 (e.g., from DR manager 141) to replicate all code and state from container 400 and to transmit that replicated code and state to orchestration engine 106 (e.g., to DR manager 141) in response to receiving that replication command from orchestration engine 106 as part of a DR process.

In some examples, container 400 may use network module 402 in conjunction with kernel interface 404 to compose, send, and receive data to and from a network. For example, network module 402 may enable container 400 to communicate according to various networking protocols, such as Virtual Extensible LAN (VXLAN), IPVLAN, MACVLAN, VPLS, EVPN, or PBB-EVPN. According to example techniques of this disclosure, network module 402 may operate to self-register the corresponding container of a plurality of containers, operating within a plurality of networks coupled to a cloud exchange, with the cloud exchange to facilitate communications among the containers via the cloud exchange. Network module 402 includes several identifiers so that container 400 may be identified on a private network, such as a cloud service or enterprise network. Container identifier 414 is a data field that uniquely identifies container 400 against other containers. In some examples, container identifier 414 is a port ID that corresponds to a TCP / UDP port of the host computer executing container 400. Host network address 416 is a data field that identifies the network address of the host on which container 400 executes. In some examples, host network address 416 may be an IP address. In various examples, host network address 416 may generally be a Uniform Resource Identifier (URI).

In some examples, container 400 is configured to execute at least one microservice 410 and associated microservice-specific libraries 412. In some examples, container 400 is configured to execute at least one application and associated application-specific libraries, such as application 406A and 406B and application-specific libraries 408A and 408B, respectively. Container 400 may provide the at least one microservices and applications to a customer for access through a cloud service. Because container 400 is virtualized and isolated from the system kernel and other containers, container 400 may provide a customer with safe and secure access to the at least one microservices and applications. In some examples, container 400 may be a container within a Microsoft Azure cloud service. In these examples, container 400 may provide a customer with an environment to execute a suite of applications. In some examples, container 400 may be a container within an Amazon Web Services cloud service. In these examples, container 400 may provide a customer with an environment to execute one or more microservices.

The architecture of container 400 illustrated in FIG. 6 is shown for example purposes only. Example techniques as set forth in this disclosure may be implemented in the example container of FIG. 6, as well as other types of containers not described specifically herein. In various examples, container 400 may be configured in a variety of ways. In some examples, container 400 may implement various APIs, one or more applications, or one or more microservices. In some examples, container 400 may implement a single application or a single microservice. Nothing in this disclosure should be construed so as to limit techniques of this disclosure to the example architecture illustrated by FIG. 6.

FIG. 7 is a block diagram illustrating a cloud exchange with an orchestration engine that includes a hot swap manager 540 and a DR manager 510 according to techniques described in this disclosure. Orchestration engine 550 may represent an example instance of orchestration engine 106 of FIGS. 1 and 3. While FIG. 7 is described with reference to FIGS. 1 and 3, FIG. 7 may apply generally to various techniques of this disclosure.

Orchestration engine 550 initially provisions a virtual circuit connection for enterprise network 118 via VRF 242A with first cloud service 532A which hosts containers 534A, 534B, ... 534N ("containers 534"), some of which are licensed to enterprise 116 to execute applications on behalf of enterprise 116. Orchestration engine 550 stores, to a database or other data store 552, container records 554 having entries for respective containers and including corresponding container registration data for containers. The container registration data may include a respective container registration handle for each available container, where each container registration handle includes both a network address and a unique container identifier (potentially a port number) for the respective container. Orchestration engine 550 may use container registration data to extend network connectivity through the private network that includes a container and address the container directly via a virtual circuit by which the private network communicate with the cloud exchange and, in some cases, other private networks. Container hot swap manager 540, which may be an implementation corresponding to container hot swap manager 140 of FIGS. 1 and 2, may modify the container registration handles in container data store 552 to assign the network address of a first container to one or more second, alternative containers, in the case of performing a hot swap. Container hot swap manager 540 may modify the container registration handles in container data store 552 to assign the network address of a first container to one or more second, additional containers, in the case of performing a hot scaling.

In some examples, container hot swap manager 540 may also copy state from a first container in a first CSP, and store the container's state in data store 552 before or in parallel with sending the state to one or more containers in a second CSP. Hot swap manager 540 may store the state more or less temporarily in some examples to ensure that the state is preserved before sending the state to the new one or more containers in the new CSP and confirming with the second CSP that the state has been successfully written to the new one or more containers and is being used for execution by the one or more new containers without any loss of state from the original container in the first CSP after the hot swap or hot scaling process.

Orchestration engine 550 may create an association between containers owned by, licensed to, and/or accessible to an enterprise but operating in different private networks (e.g., an enterprise network and one or more cloud service networks). Based on a network address for a container and an IP subnet identified by a service key, orchestration engine 550 may correlate a service key to a container executing at a cloud service network to associate the container to an enterprise that provided the service key. In this way, the container is registered to the enterprise in orchestration engine 550.

Orchestration engine 550 may establish a virtual circuit between an enterprise network and the cloud service network. Containers may provide their corresponding container registration data to orchestration engine 550 via the virtual circuit (e.g., one or more VLANs). Orchestration engine 550 may in some cases provide the container registration data to the enterprise such that containers executing at the enterprise network may address containers in the cloud service network using a container host network address and container port / identifier, via the virtual circuit.

For container hot swap manager 540, the enterprise operator may create an association between containers. The enterprise operator may access a list of containers for the enterprise and a list of containers for various cloud services, create associations between containers from the different lists, and configure settings or schedules for hot swaps and hot scalings between containers in different cloud services. For instance, the enterprise operator may specify container 129A in a second cloud service is a replica of container 126A in a first cloud service. In some cases, containers accessible via a particular virtual circuit may be automatically associated by orchestration engine 550. Having been associated, orchestration engine 550 then provides the container registration data for a container to associated containers to enable the associated containers to address data communications to the container for hot swaps or hot scalings of the containers.

In various examples, container hot swap manager 540 may store hot swap and hot scaling configuration settings for particular containers. When container hot swap manager 540 detects that specific criteria have been met or triggered for a hot swap of a first container in a first CSP, container hot swap manager 540 may copy all of the state from the first container, stand up a new container in a second CSP if needed, send the state from the first container in the first CSP to the second container in the second CSP, and confirm that the second container in the second CSP is executing with the state from the first container. In some examples, container hot swap manager 540 may store the state in an internal data store 552 of orchestration engine 550 during at least part of the hot swap process. When container hot swap manager 540 detects that specific criteria have been met or triggered for a hot scaling of a first container in a first CSP, container hot swap manager 540 may copy all of the state from the first container, stand up one or multiple new containers in a second CSP if needed, send at least some of the state from the first container in the first CSP to the one or multiple containers in the second CSP, and confirm that the one or multiple containers in the second CSP are executing with the at least part of the state from the first container.

Orchestration engine 550 in some instances offers a backup service 560 by which orchestration engine 550 may, for a customer of the cloud exchange, facilitate container backup to a cloud service provider network. Backup service 560 may be executed by one or more applications and/or microservices of orchestration engine. Orchestration engine 550 may receive, from an enterprise or other customer of the cloud exchange, a service key identifying a cloud service. The service key may be associated with and identify an IP subnet within the cloud service to which the service key grants access. Orchestration engine 550 may store the service key.

Orchestration engine 550 may also receive, via APIs 105, DR configuration settings 512 from customers and other users such as enterprise 116 in association with cloud exchange accounts or licenses for those customers or users. Cloud exchange 502 is managed at least in part by an interconnection platform that includes orchestration engine 550. Orchestration engine 550 stores, to a database or other data store, the DR configuration settings 512. DR configuration settings 512 may include, e.g., criteria for qualifying disruptions to trigger initiation of a DR process by DR manager 510, protocols for how to select a second cloud service among available cloud services to host a DR infrastructure for a DR process, and designations of how many containers of the second cloud service to use to host the DR infrastructure for the DR process.

In some examples, DR configuration settings 512 may include configuration data for selecting a cloud service provider network to provide DR services orchestrated by orchestration engine 550 on behalf of enterprise 116. The configuration data may specify that the cloud service provider network to provide DR services is preferably colocated within a data center in which enterprise 116 is also colocated, where the data center is deployed by the cloud exchange provider and includes the cloud exchange. The configuration data may specify the cloud service provider network to provide DR services for a particular primary cloud service network. For example, the configuration data may specify that the cloud service provider network that provides second cloud service 532B is to be used by cloud exchange 502 to provide DR services for first cloud service 532A for enterprise 116.

Prior to or as part of a DR process, orchestration engine 550 may access container registration data for containers 534 of first cloud service 532A and for containers 551 of second cloud service 532B. The container registration data may include a respective container registration handle for each available container, where each container registration handle includes both a network address and a unique container identifier (potentially a port number) for the respective container. Orchestration engine 550 may use container registration data to extend network connectivity through the first cloud service 532A that includes a respective container 534N and address the container 534N directly via a virtual circuit 127A via VRF 242A by which first cloud service 532A communicates with cloud exchange 502 and, in some cases, other cloud services (e.g., cloud service 532B).

DR manager 510 monitors first cloud service 532A and detects a disruption that occurs to the nominal operation of first cloud service 532A and that meets conditions that qualify as a DR triggering disruption according to rules or protocols set in the user-selected DR configuration settings stored by DR manager 510. DR manager 510 may be considered to detect an indication of the disruption, where the indication is any monitoring sign or clue of the actual disruption that has occurred. Examples of DR triggering disruptions may include loss or significant degradation in connectivity between first cloud service 532A and enterprise network 118, an indication of failure of one or more of containers 534, and a notification from a cloud service provider for first cloud service 532A indicating a service disruption.

DR manager 510 responds to the indication of the disruption by provisioning a DR infrastructure interface layer 522A on orchestration engine 550, and provisioning DR infrastructure layers 522B, 524, 526, 528 on pre-existing containers 551A, 551B, ... 551N ("containers 551") of a second cloud service 532B that DR manager 510 selects from among a plurality of available cloud services for hosting the DR infrastructure. DR manager 510 may rapidly place a hold on the state of containers 534 of first cloud service 532A and begin copying the code and state from containers 534 to data store 552 as container data 554, and re-directs application flow addressed to containers 534 to a temporary service request queue 536 in DR infrastructure interface layer 522A of orchestration engine 550, while DR manager 510 gets DR infrastructure layers 522B, 524, 526, 528 up and running on containers 551 of second cloud service 532B. For DR manager 510 to place a hold on and replicate the state of containers of containers 534 of first cloud service 532A, DR manager 510 may interface with state replication modules 442 (as shown in FIG. 6) previously installed on containers 534 by DR manager 510 and direct state replication modules 442 to preserve pending state in a local in-memory data grid, database, or other memory resource or data store in first cloud service 532A as needed while DR manager 510 rapidly reads the state. Data store 552 may represent a Redis data store in some examples. Container data 554 may include application code, state, and/or other data executed by or stored or loaded on containers. Container data 554 may include container registration data for one or more containers of cloud services 532A, 532B.

DR configuration settings 512 may include definitions for API endpoints for an interface layer of an application deployed by enterprise network 116 to first cloud service 532A. To provision DR infrastructure interface layer 522A, DR manager 510 may generate interface software to expose the API endpoints defined in DR configuration settings 512. DR configuration settings 512 may include definitions of interface layers for multiple different applications of enterprise 116 and/or definitions of interface layers for multiple different applications for corresponding enterprises. In this way, DR manager 510 may provide DR services for multiple different enterprise customers of the cloud exchange provider, and generate corresponding instances of DR infrastructure interface layer 522A to handle service requests for the different enterprise customers.

DR infrastructure layers 522B, 524, 526, 528 include a DR infrastructure interface layer 522B, DR infrastructure network layer 524, a DR infrastructure compute layer 526, and a DR infrastructure storage layer 528 in this example, which may perform interface/API, networking, computing, and storage functions, respectively. The DR infrastructure may include other layers and/or a subset of these representative layers in other examples. Each of DR infrastructure layers 522B, 524, 526, 528 may be executed on one or more of containers 551 of second cloud service 532B, and each of the containers 551 used for the DR infrastructure may be used for one or more of DR infrastructure layers 524, 526, 528. DR infrastructure layers 522B, 524, 526, 528 are an example implementation of DR infrastructure layers 144 of FIG. 1.

DR manager 510, which may be an implementation corresponding to DR manager 141 of FIG. 1, may modify routing information of VRFs 242 as part of a DR process to redirect cloud service traffic such as application traffic flow from enterprise network 118 to DR infrastructure interface layer 522A. DR manager 510 may thus re-direct traffic addressed to the containers 534 of first cloud service 532A to DR infrastructure interface layer 522A, which may be executed on a host computing device of cloud exchange 502 and deployed by the cloud exchange 502 provider. Once DR manager 510 has received an indication that DR infrastructure interface layer 522B is operable to handle service requests from enterprise network 118, DR manager 510 may again modify routing information of VRFs 242 as part of the DR process to re-direct traffic addressed to the containers 534 of first cloud service 532A to corresponding replicated containers 551 of the selected second cloud service 532B.

Orchestration engine 550 may thus create an association from containers accessible to an enterprise or other user in a first cloud service to containers requisitioned for a dynamically provisioned, on-demand DR infrastructure in a second cloud service. Based on network addresses for containers and one or more IP subnets identified by one or more service keys, orchestration engine 550 may correlate the one or more service keys to the requisitioned containers executing at the second cloud service to associate the containers to the enterprise that provided the one or more service keys. In this way, the containers designated and used for the DR infrastructure are registered with orchestration engine 550 to the enterprise or other user.

Orchestration engine 550 may establish a new virtual circuit between the first cloud service and the second cloud service. Orchestration engine 550 may establish a new virtual circuit between enterprise network 118 and second cloud service 532B. Containers may provide their corresponding container registration data to orchestration engine 550 via the virtual circuit (e.g., a VLAN). Container hot swap manager 540 and DR manager 510 may be vendor-neutral in that the cloud exchange provider may implement container hot swap manager 540 and/or DR manager 510 in conjunction with any of a plurality of cloud service providers selectable by the enterprise. In some cases, orchestration engine 550 may independently deploy containers to cloud services in order to facilitate the back-end setup for container hot swap manager 540.

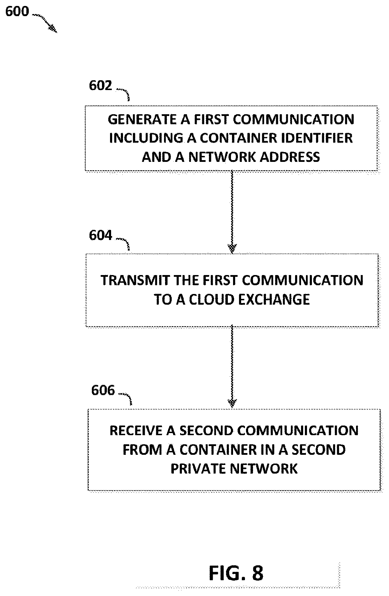

FIG. 8 is a flowchart illustrating an example method according to the techniques of the disclosure. FIG. 8 is described with reference to FIGS. 1 and 5; however, FIG. 8 may apply generally to the techniques of the disclosure. In some examples, a first container, such as container 126A, may communicate with a second container, such as container 129A. In one example, container 126A may compose a first data communication to container 129A (602). The first data communication may indicate a container identifier of container 129A and a network address for a host executing at cloud service 124B and hosting container 129A. In some examples, the container identifier may be a port ID identifying a TCP / UDP port of the host, and the network address may be an IP address through which the host may be reached. Container 126A may transmit the first data communication to a router of the cloud exchange, such as router 110A (604). Router 110A may forward the message through the cloud exchange to the host executing container 129A. Container 126A may receive a second data communication from container 129A (606). The second data communication may indicate a container identifier of container 126A and a network address for a host executing at cloud service 124A and hosting container 126A.

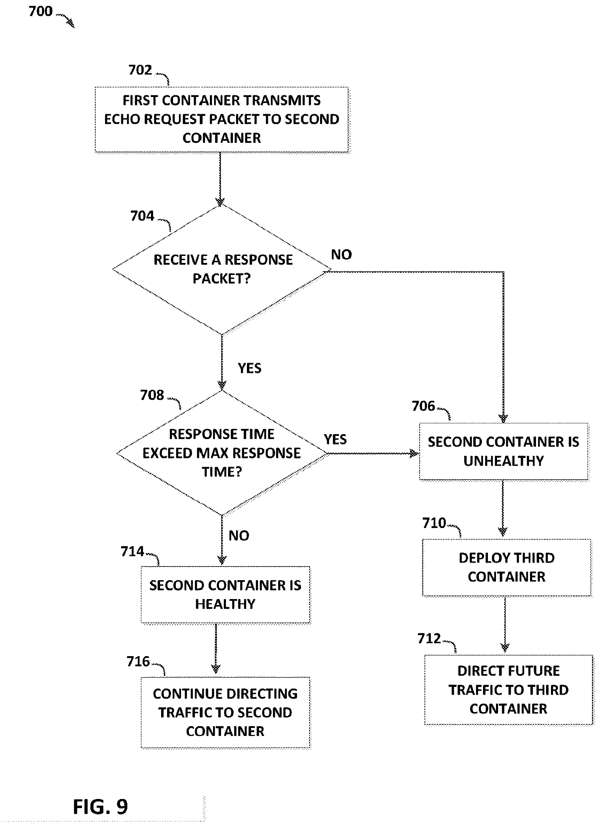

FIG. 9 is a flowchart illustrating an example method for determining the health of a container according to the techniques of the disclosure. FIG. 9 is described with reference to FIGS. 1 and 5; however, FIG. 9 may apply generally to the techniques of the disclosure. According to the techniques of the disclosure, in some examples, a first container, such as container 126A may monitor the health of a second container, such as 129A of cloud service 124B. In some examples, container 126A may check the health of container 129A by transmitting an echo request packet to container 129A (702). Container 126A may determine whether an echo response packet is received (704). If no echo response packet is received, container 126A may determine that container 129A is unhealthy (706). If an echo response packet is received, but the time taken to receive the echo response packet (i.e., the round-trip time) exceeds a predetermined maximum threshold time (708), container 126A may determine that container 129A is unhealthy (706). If the round-trip time is less than a predetermined maximum threshold time, container 126A may determine that container 129A is healthy (714). As such, container 126A may continue to direct traffic to container 129A.

In some examples, if container 126A determines that container 129A is unhealthy (706), container 126A may take corrective action. In some examples, container 126A may send a request to orchestration engine 106 to deploy a second container in cloud service 124B, such as container 129B (710). In further examples, container 126A may redirect all or a portion of network traffic destined for container 129A to the newly deployed container, i.e., container 129B. In some examples, container 126A may take different actions depending on whether it never received an echo response packet or whether it received an echo response packet, but the round-trip time exceeded a maximum permitted response time. For example, if container 126A never receives an echo response packet, it may determine that one or more of container 129A, the host executing container 126D, subnet 128B, or cloud service 124B (as shown in FIG. 5) is disconnected from the network. In this example, container 126A may determine that all network traffic directed to container 129A should be redirected to deployed container 129B or another container indicated to still be healthy and online, to ensure that service to the customer is not interrupted. In other examples, if container 126A received an echo response packet, but the round-trip time exceeded a maximum permitted response time, it may determine that one or more of container 129A, the host executing container 126D, subnet 128B, or cloud service 124B is over capacity, and at least a portion of network traffic directed to container 129A should be redirected to newly deployed container 129B to ensure that the customer experience is not negatively impacted by poor network connection speeds.

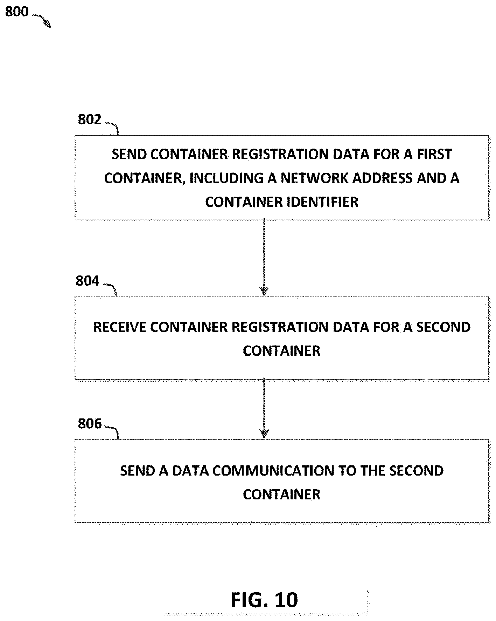

FIG. 10 is a flowchart illustrating an example method 800 for transmitting container registration data for a container. In one example, a container within a private network of a plurality of private networks connected to a cloud exchange may send container registration data for the container to the cloud exchange (802). In some examples, the container registration data may comprise a network address for a host that executes the container and a container identifier for the container. In some examples, the network address may be an IP address of the host. In some examples, the container identifier may be a port ID identifying a TCP or UDP port of the host. In some examples, the container may comprise a first container, and the container registration data may comprise first container registration data. In some examples, the container may receive, from the cloud exchange, second container registration data for a second container (804). In some examples, the container may send a data communication based on the second container registration data to the second container (806).

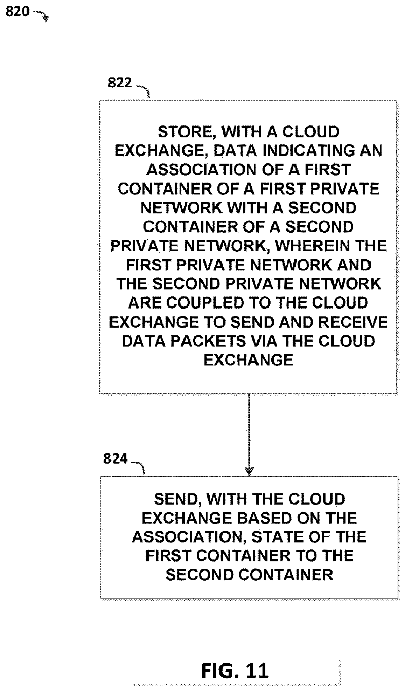

FIG. 11 is a flowchart illustrating an example method 820 according to techniques of this disclosure. FIG. 11 is described with reference to FIGS. 1 and 2; however, FIG. 11 may apply generally to any of various techniques of this disclosure. In some examples, a cloud exchange (e.g., cloud exchange 102, and in some particular examples, container hot swap manager 140 of orchestration engine 106 of cloud exchange 102) may store data indicating an association of a first container of a first private network with a second container of a second private network (e.g., container 126A of CSP 122A, container 129A of CSP 122B), wherein the first private network and the second private network are coupled to the cloud exchange to send and receive data packets via the cloud exchange (822). The cloud exchange may, based on the association indicated by the stored data, send state of the first container of the first private network to the second container of the second private network (824), such as in a hot swap or hot scaling process. This may apply to multiple second containers in a hot scaling process, and the second container may take over all or part of the processing or executing of the first container.

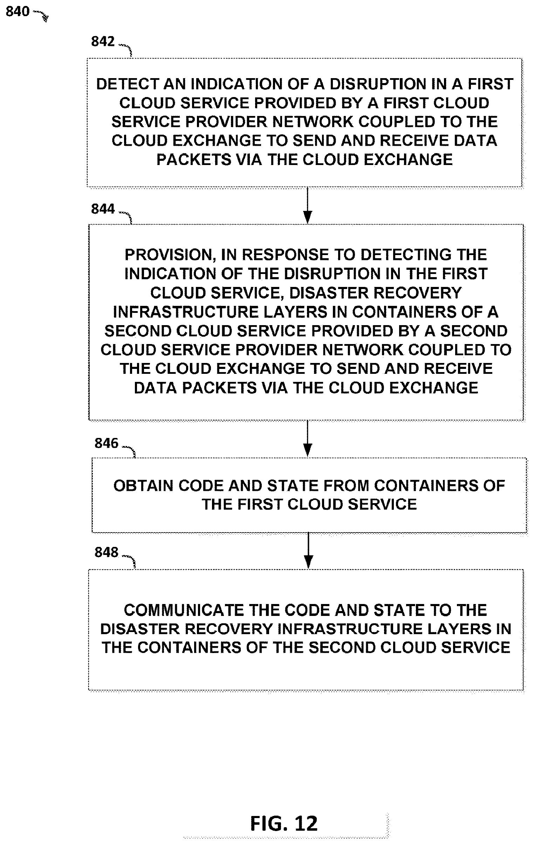

FIG. 12 is a flowchart illustrating an example method 840 according to techniques of this disclosure. FIG. 12 is described with reference to FIGS. 1 and 3; however, FIG. 12 may apply generally to any of various techniques of this disclosure. In some examples, a cloud exchange (e.g., cloud exchange 102, and in some particular examples, DR manager 141 of orchestration engine 106 of cloud exchange 102) may detect an indication of a disruption in a first cloud service provided by a first cloud service provider network coupled to the cloud exchange to send and receive data packets via the cloud exchange (e.g., a disruption in cloud service 124A) (842). The cloud exchange (e.g., cloud exchange 102, and in some particular examples, DR manager 141 of orchestration engine 106 of cloud exchange 102) may provision, in response to detecting the indication of the disruption in the first cloud service, disaster recovery infrastructure layers in containers of a second cloud service provided by a second cloud service provider network coupled to the cloud exchange to send and receive data packets via the cloud exchange (844). The cloud exchange (e.g., cloud exchange 102, and in some particular examples, DR manager 141 of orchestration engine 106 of cloud exchange 102) may obtain code and state from containers of the first cloud service (846). The cloud exchange (e.g., cloud exchange 102, and in some particular examples, DR manager 141 of orchestration engine 106 of cloud exchange 102) may communicate the code and state to the disaster recovery infrastructure layers in the containers of the second cloud service (848). The cloud exchange (e.g., cloud exchange 102, and in some particular examples, DR manager 141 of orchestration engine 106 of cloud exchange 102) may also buffer service requests from an enterprise, and subsequently output the buffered service requests to the disaster recovery infrastructure layers in the containers of the second cloud service after the DR infrastructure is provisioned at the second cloud service.

While specific implementations of containers such as Docker, LXC, and CoreOS Rocket containers are referred to in some examples herein, various embodiments may also use or be embodied with other types and variations of containers that may not necessarily conform to all aspects of a definition or specification of any specific container implementation. All references herein to the specific example of Docker containers may be understood to analogously encompass other types of containers and other types of lightweight counterparts to virtual machines that may provide a virtualized environment for execution of a microservice or other application without including the full set of features of a complete virtual machine.

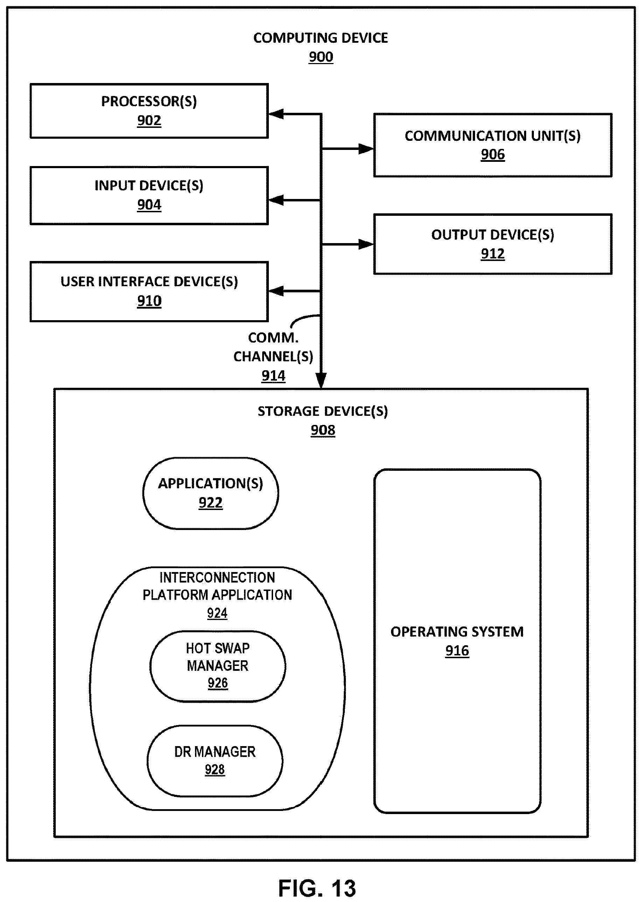

FIG. 13 is a block diagram illustrating one example of a computing device that operates in accordance with one or more techniques of the present disclosure. FIG. 13 may illustrate a particular example of a server, a host 304 as shown in FIG. 5, or another computing device 900 that implements cloud exchange 102 or any portion thereof, or that includes one or more processor(s) 902 for executing at least a portion of interconnection platform application 924, or any other computing device described herein. Other examples of computing device 900 may be used in other instances. Although shown in FIG. 13 as a stand-alone computing device 900 for purposes of example, a computing device may be any component or system that includes one or more processors or other suitable computing environment for executing software instructions and, for example, need not necessarily include one or more elements shown in FIG. 13 (e.g., communication units 906; and in some examples components such as storage device(s) 908 may not be colocated or in the same chassis as other components). Computing device 900 may be located and execute, for example, at another interconnection facility, or at a branch office or cloud computing environment employed or used by a colocation facility or cloud exchange provider.

As shown in the specific example of FIG. 13, computing device 900 includes one or more processors 902, one or more input devices 904, one or more communication units 906, one or more output devices 912, one or more storage devices 908, and one or more user interface (UI) devices 910. Computing device 900, in one example, further includes one or more applications 922, interconnection platform application 924, and operating system 916 that are stored on one or more storage devices 908 and executable by computing device 900. Each of components 902, 904, 906, 908, 910, and 912 are coupled (physically, communicatively, and/or operatively) for inter-component communications. In some examples, communication channels 914 may include a system bus, a network connection, an inter-process communication data structure, or any other method for communicating data between the various other components of computing device 900. As one example, components 902, 904, 906, 908, 910, and 912 may be coupled by one or more communication channels 914.

Processors 902, in one example, are configured to implement functionality and/or process instructions for execution within computing device 900. For example, processors 902 may be capable of processing instructions stored in storage device 908. Examples of processors 902 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 908 may be configured to store information within computing device 900 during operation. Storage device 908, in some examples, is described as a computer-readable storage medium. In some examples, storage device 908 is a temporary memory device, meaning that a primary purpose of storage device 908 is not long-term storage. Storage device 908, in some examples, is described as a volatile memory device, meaning that storage device 908 does not maintain stored contents when the computer is turned off. Examples of volatile memory devices include random access memories (RAM), dynamic random access memories (DRAM), static random access memories (SRAM), and other forms of volatile memory devices known in the art. In some examples, storage device 908 is used to store program instructions for execution by processors 902. Storage device 908, in one example, is used by software or applications running on computing device 900 to temporarily store information during program execution.

Storage devices 908, in some examples, also include one or more computer-readable storage media. Storage devices 908 may be configured to store larger amounts of information than volatile memory. Storage devices 908 may further be configured for long-term storage of information. In some examples, storage devices 908 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 900, in some examples, also includes one or more communication units 906. Computing device 900, in one example, utilizes communication units 906 to communicate with external devices via one or more networks, such as one or more wired/wireless/mobile networks. Communication units 906 may include a network interface card, such as an Ethernet card, an optical transceiver, a radio frequency transceiver, or any other type of device that can send and receive information. Other examples of such network interfaces may include 3G, 4G and WiFi radios. In some examples, computing device 900 uses communication unit 906 to communicate with an external device.

Computing device 900, in one example, also includes one or more user interface devices 910. User interface devices 910, in some examples, are configured to receive input from a user through tactile, audio, or video feedback. Examples of user interface devices(s) 910 include a presence-sensitive display, a mouse, a keyboard, a voice responsive system, a video camera, a microphone, or any other type of device for detecting a command from a user. In some examples, a presence-sensitive display includes a touch-sensitive screen.

One or more output devices 912 may also be included in computing device 900. An output device 912, in some examples, is configured to provide output to a user using tactile, audio, or video stimuli. Output device 912, in one example, includes a presence-sensitive display, a sound card, a video graphics adapter card, or any other type of device for converting a signal into an appropriate form understandable to humans or machines. Additional examples of output device 912 include a speaker, a cathode ray tube (CRT) monitor, a liquid crystal display (LCD), or any other type of device that can generate intelligible output to a user.

Computing device 900 may include operating system 916. Operating system 916, in some examples, controls the operation of components of computing device 900. For example, operating system 916, in one example, facilitates the communication of one or more applications 922 and interconnection platform application 924 with processors 902, communication unit 906, storage device 908, input device 904, user interface device 910, and output device 912. Application 922 and interconnection platform application 924 may also include program instructions and/or data that are executable by computing device 900. Interconnection platform application 924 may be configured to, when executed by computing device 900, provide functionality attributed to interconnection platforms described herein, including interconnection platform 103, and components or features thereof such as hot swap manager 140 and orchestration engine 106, as shown in FIGS. 1 and 2.

For example, interconnection platform application 924 may include a hot swap manager 926 and/or a disaster recovery (DR) manager 928. Hot swap manager 926 and/or DR manager 928 may be implemented as application modules, libraries, features, or other portions of executable instruction code as part of interconnection platform application 924. Hot swap manager 926 and/or DR manager 928 may be implemented as a separate application or any other form of executable instruction code in other examples.

Hot swap manager 926 may include instructions for causing computing device 900 to perform any of the techniques described in the present disclosure such as with respect to hot swap manager 140 and/or hot swap manager 540 as described above. As one example, hot swap manager 926 may include instructions that cause computing device 900 to store data (on any one or more of computing device 900, orchestration engine 106, networking platform 108, and/or one or more routers 110 / 200 as shown in FIGS. 1-3, and/or any other computing or networking resource) indicating an association of a first container of a first private network with a second container of a second private network, wherein the first private network and the second private network are coupled to cloud exchange 106 to send and receive data packets via cloud exchange 106. Hot swap manager 926 may also include instructions that cause computing device 900, orchestration engine 106, networking platform 108, and/or one or more routers 110 / 200 as shown in FIGS. 1-3, and/or any other computing or networking resource, to send, based on the association, state of the first container to the second container. Hot swap manager 926 may also include instructions that cause computing device 900 to perform any other functions of a hot swap and/or hot scaling process in accordance with the techniques of this disclosure.

DR manager 928 may include instructions for causing computing device 900 to perform any of the techniques described in the present disclosure such as with respect to DR manager 141 and/or DR manager 510 as described above. DR manager 928 may include instructions for causing computing device to perform the techniques described in the present disclosure with respect to DR manager 141 and/or DR manager 510. As one example, DR manager 928 may include instructions that cause computing device 700 to detect disruptions in a first cloud service provider network, provision a temporary DR infrastructure interface layer to buffer a service request queue, select a backup cloud service provider network, provision DR infrastructure layers in containers of the backup cloud service provider network, copy code and state from containers of the first cloud service provider network to the DR infrastructure layers, apply the buffered service requests from the temporary DR infrastructure interface layer to the DR infrastructure interface layer at the backup cloud service provider network, redirect incoming service requests to the backup cloud service provider network, and perform any other functions of a DR process in accordance with the techniques of this disclosure.

Various embodiments of this disclosure generally involving a virtual network may thus be implemented as in the following examples, numbered A1-A20:
Example A1: A method comprising: sending, by a container to a cloud exchange via an application programming interface exposed by an interconnection platform of the cloud exchange, container registration data for the container, the container registration data comprising a network address for a host that executes the container and a container identifier for the container.
Example A2. A method as in example A1, wherein the container identifier comprises one of a Transmission Control Protocol (TCP) port and a User Datagram Protocol (UDP) port.
Example A3. A method as in either of examples A1 or A2, wherein the container comprises a user-space instance from a plurality of user-space instances that share an operating system executing on the host.
Example A4. A method as in any of examples A1-A3, wherein the container executes at an enterprise network coupled to the cloud exchange to receive, via one or more virtual circuits, cloud services from one or more cloud service providers coupled to the cloud exchange.
Example A5. A method as in example A4, wherein the sending the container registration data comprises sending the container registration data via the one or more virtual circuits.
Example A6. A method as in any of examples A1-A5, wherein the container executes at a cloud service provider network coupled to the cloud exchange to provide, via one or more virtual circuits, a cloud service to one or more customers coupled to the cloud exchange.
Example A7. A method as in example A6, wherein the sending the container registration data comprises sending the container registration data via the one or more virtual circuits.
Example A8. A method as in any of examples A1-A7, wherein the container comprises a first container, and wherein the container registration data comprises first container registration data, the method further comprising: receiving, by the container from the cloud exchange, second container registration data for a second container; and sending, by the container to the second container based on the second container registration data, a data communication.
Example A9. A method as in example A8, wherein the first container executes at a first private network coupled to the cloud exchange, and wherein the second container executes at a second private network coupled to the cloud exchange.
Example A10. A method as in example A9, wherein the first private network comprises an enterprise network for an enterprise customer of a cloud exchange provider for the cloud exchange, and wherein the second private network comprises a cloud service for a cloud service provider customer of the cloud exchange provider for the cloud exchange.
Example A11. A method as in example A9, wherein the first private network comprises a cloud service for a first cloud service provider customer of a cloud exchange provider for the cloud exchange, and wherein the second private network comprises a cloud service for a second cloud service provider customer of the cloud exchange provider for the cloud exchange.
Example A12. A method as in example A8, further comprising: determining, by the first container, a health of the second container at least in part by sending the data communication; and redirecting application traffic from the second container to a third container in response to determining the health of second container.
Example A13. A method comprising: receiving, by a cloud exchange from a container executing at a private network coupled to the cloud exchange, container registration data for the container, the container registration data comprising a network address for a host that executes the container and a container identifier for the container; and storing, by the cloud exchange, the container registration data.
Example A14. A method as in example A13, wherein the container comprises a first container, and wherein the private network comprises a first private network, the method further comprising: sending, by the cloud exchange to a second container executing at a second private network, the container registration data.
Example A15. A method as in example A14, further comprising: storing data indicating an association between the first container and the second container, wherein sending the container registration data comprises sending the container registration data based on data indicating the association.
Example A16. A method as in example A14, further comprising: receiving, by the cloud exchange, an indication of the association from an enterprise.
Example A17. A method as in any of examples A13-A16, further comprising: determining, by the cloud exchange, a health of the container at least in part by sending a data communication to the container, the data communication including the container registration data.
Example A18. A method as in example A17, further comprising: in response to determining the container is not healthy, migrating the container to another private network.
Example A19. A method as in example A17, further comprising: in response to determining the container is not healthy, redirecting application traffic from the container to another container executing at a different private network.
Example A20. A method as in example A17, further comprising: storing, by the cloud exchange, state for the container indicating a state of one or more applications executing on the container, wherein migrating the container to another private network comprising sending the state for the container to the another private network.
Example A21. A method as in any of examples A13-A20, further comprising: configuring, by the cloud exchange, a virtual circuit to the private network, wherein receiving the container registration data comprises receiving the container registration data via the virtual circuit.
Example A22. A method as in any of examples A13-A21, further comprising: sending, by the cloud exchange to the container based on the container registration data, a data communication.
Example A23. A computing device comprising: at least one processor operably coupled to a memory; a kernel configured for execution by the at least one processor; and a container configured to execute by the kernel, wherein the container comprises a network module configured to output container registration data to a cloud exchange via an application programming interface exposed by an interconnection platform of the cloud exchange, the container registration data comprising a network address for a host that executes the container and a container identifier for the container.
Example A24. A cloud exchange comprising: a network; and an interconnection platform configured to configure the network to interconnect a plurality of private networks, wherein the cloud exchange is configured to receive, from a container executing at a private network of the plurality of private networks and via the interconnection platform, container registration data for the container, the container registration data comprising a network address for a host that executes the container and a container identifier for the container.
Example A25. A method comprising: transmitting, by a first container of a first private network of a plurality of private networks coupled to a cloud exchange and to a router of the cloud exchange, a first data communication to request an indication of a health of a second container of a second private network of the plurality of private networks coupled to the cloud exchange; and receiving, by the first container and from the router, a second data communication originated by a second container of a second private network of the plurality of private networks coupled to the cloud exchange, the second data communication indicating the health of the second container.
Example A26. A method as in example A25, further comprising: determining, by the first container based on the second data communication, the health of the second container; and deploying, by the first container, a third container upon determining that the second container is unhealthy.
Example A27. A method as in either of examples A25 or A26, wherein: the first data communication comprises an echo request packet; the second data communication comprises an echo response packet; and determining, by the first container, the health of the second container comprises determining, by the first container, that the second container is unhealthy if the first container does not receive the echo response packet within a pre-determined time.
Example A28. A method as in any of examples A25-A27, wherein the first data communication comprises: a container identifier of the second container; and a network address for a host executing at the second private network and hosting the second container.

Various embodiments of this disclosure generally involving a inter-container communication over a virtual network for hot swaps and hot scaling may thus be implemented as in the following examples, numbered B1-B20:
Example B1. A method comprising: storing, with at least one processor of a cloud exchange, data indicating an association of a first container of a first private network with a second container of a second private network, wherein the first private network and the second private network are coupled to the cloud exchange to send and receive data packets via the cloud exchange; and sending, with the at least one processor of the cloud exchange, based on the association, state of the first container to the second container.
Example B2. A method as in example B1, further comprising: receiving, by the cloud exchange, cloud service traffic from an enterprise network; and redirecting, by the cloud exchange, the cloud service traffic from the first container to the second container.
Example B3. A method as in either of examples B1 or B2, wherein the state enables the second container to replicate an operating environment of the first container.
Example B4. A method as in any of examples B1-B3, wherein the state of the first container comprises one or more of: application data, application stack configuration data, microservice state, memory data, commands, process information, and current instruction pointers.
Example B5. A method as in any of examples B1-B4, wherein copying the state from the first container to the second container is performed while the first container is executing one or more applications.
Example B6. A method as in any of examples B1-B5, further comprising registering a registration handle for the second container with the first container via the cloud exchange.
Example B7. A method as in example B6, wherein the registration handle comprises a network address for a host of the second private network that executes the second container, and a container identifier for the second container.
Example B8. A method as in example B6, wherein copying the state from the first container to the second container comprises the first container using the registration handle to communicate the state to the second container via the cloud exchange.
Example B9. A method as in any of examples B1-B8, wherein associating the address of the first container with the second container comprises registering a Uniform Resource Identifier (URI) of the second container with a data store of container information.
Example B10. A method as in any of examples B1-B9, further comprising creating, with the cloud exchange, the second container, prior to associating the address of the first container with the second container.
Example B11. A method as in any of examples B1-B10, further comprising: partitioning tasks from the first container between the first container and the second container, wherein the copying the state from the first container to the second container is performed for the tasks partitioned to the second container.
Example B12. A method as in example B11, wherein partitioning the tasks from the first container between the first container and the second container comprises sending units of workload from the first container to the second container in accordance with one or more policies based on content and one or more rules.
Example B13. A method as in any of examples B1-B12, further comprising: maintaining, with the cloud exchange, a data store of container registration information, wherein the container registration information comprises data associating the address of the first container with the second container.
Example B14. A method as in any of examples B1-B13, wherein associating the address of the first container with the second container and copying the state from the first container to the second container are performed in response to a customer-entered request.
Example B15. A method as in any of examples B1-B14, wherein associating the address of the first container with the second container and copying the state from the first container to the second container are performed in response to one or more customer-selected hot swap configuration criteria.
Example B16. A method as in example B15, further comprising providing, with the cloud exchange, an interface for receiving the customer-selected hot swap configuration criteria, wherein the customer-selected hot swap configuration criteria comprise a customer-selected first cloud service provider and a customer-selected second cloud service provider, and wherein the first container is hosted by the customer-selected first cloud service provider, and the cloud exchange creates the second container with the customer-selected second cloud service provider.
Example B17. A method as in example B15, wherein the one or more customer-selected hot swap configuration criteria are stored in an orchestration engine of the cloud exchange.
Example B18. A method as in any of examples B1-B17, wherein associating the address of the first container with the second container and copying the state from the first container to the second container are performed in response to a timing defined by a customer-selected schedule.
Example B19. A method as in any of examples B1-B18, further comprising: creating a channel from the first container to the second container; and orchestrating a migration of the state from the first container to the second container.
Example B20. A method as in any of examples B1-B19, further comprising: placing a hold on operations of the first container prior to copying the state from the first container to the second container; and re-starting the operations in the second container subsequent to copying the state from the first container to the second container.
Example B21. A method as in any of examples B1-B20, wherein the first container comprises a user-space instance from a plurality of user-space instances that share an operating system executing on a host of the first private network, and wherein the second container comprises a user-space instance from a plurality of user-space instances that share an operating system executing on a host of the second private network.
Example B22. A method as in any of examples B1-B21, wherein the second private network comprises a cloud service provider network coupled to the cloud exchange to provide, via one or more virtual circuits, a cloud service to one or more enterprise networks coupled to the cloud exchange.
Example B23. A computing system comprising: at least one memory device; and at least one processor comprised in a cloud exchange, operably coupled to the at least one memory device, and configured to execute instructions to: store data indicating an association of a first container of a first private network with a second container of a second private network, wherein the first private network and the second private network are coupled to the cloud exchange to send and receive data packets via the cloud exchange; and send, based on the association, state of the first container to the second container.
Example B24. A computing system as in example B23, wherein the at least one processor is further configured to execute instructions to: receive cloud service traffic from an enterprise network; and redirect the cloud service traffic from the first container to the second container.
Example B25. A computing system as in either of examples B23 or B24, wherein the state of the first container comprises one or more of: application data, application stack configuration data, microservice state, memory data, commands, process information, and current instruction pointers, and wherein the state enables the second container to replicate an operating environment of the first container.
Example B26. A computing system as in any of examples B23-B25, wherein the at least one processor is further configured to execute instructions to copy the state from the first container to the second container while the first container is executing one or more applications.
Example B27. A computing system as in any of examples B23-B26, wherein the at least one processor is further configured to execute instructions to register a registration handle for the second container with the first container via the cloud exchange, wherein the registration handle comprises a network address for a host of the second private network that executes the second container, and a container identifier for the second container, and wherein copying the state from the first container to the second container comprises the first container using the registration handle to communicate the state to the second container via the cloud exchange.
Example B28. A computing system as in any of examples B23-B27, wherein the at least one processor is further configured to execute instructions to create the second container, prior to associating the address of the first container with the second container.
Example B29. A computing system as in any of examples B23-B28, wherein the at least one processor is further configured to execute instructions to: partition tasks from the first container between the first container and the second container, wherein the copying the state from the first container to the second container is performed for the tasks partitioned to the second container, and wherein partitioning the tasks from the first container between the first container and the second container comprises sending units of workload from the first container to the second container in accordance with one or more policies based on content and one or more rules.
Example B30. A computer-readable storage medium comprising instructions for causing at least one programmable processor of a cloud exchange to: store data indicating an association of a first container of a first private network with a second container of a second private network, wherein the first private network and the second private network are coupled to the cloud exchange to send and receive data packets via the cloud exchange; send, based on the association, state of the first container to the second container; receive, by the cloud exchange, cloud service traffic from an enterprise network; and redirect, by the cloud exchange, the cloud service traffic from the first container to the second container.

Various embodiments of this disclosure generally involving inter-container communication over a virtual network for disaster recovery may thus be implemented as in the following examples, numbered C1-C20:
Example C1. A method comprising: detecting, with a cloud exchange, an indication of a disruption in a first cloud service provided by a first cloud service provider network coupled to the cloud exchange to send and receive data packets via the cloud exchange; provisioning, with the cloud exchange, in response to detecting the indication of the disruption in the first cloud service, disaster recovery infrastructure layers in containers of a second cloud service provided by a second cloud service provider network coupled to the cloud exchange to send and receive data packets via the cloud exchange; obtaining, with the cloud exchange, code and state from containers of the first cloud service; and communicating, with the cloud exchange, the code and state to the disaster recovery infrastructure layers in the containers of the second cloud service.
Example C2. A method as in example C1, further comprising: receiving, with the cloud exchange, cloud service traffic from an enterprise network coupled to the cloud exchange to send and receive data packets via the cloud exchange; and redirecting, with the cloud exchange, in response to detecting the indication of the disruption in the first cloud service, the cloud service traffic from the containers of the first cloud service to the containers of the second cloud service.
Example C3. A method as in either of examples C1 or C2, further comprising: provisioning, with the cloud exchange, in response to detecting the indication of the disruption in the first cloud service, a disaster recovery infrastructure interface layer for execution by the cloud exchange, in response to detecting the indication of the disruption in the first cloud service; receiving, with the cloud exchange, a service request from an enterprise network coupled to the cloud exchange to send and receive data packets via the cloud exchange, wherein the service request is addressed to the first cloud service; and storing, with the cloud exchange, prior to the disaster recovery infrastructure layers in the containers of the second cloud service being operational to handle the service request, the service request.
Example C4. A method as in example C3, further comprising: sending, with the cloud exchange, in response to determining the disaster recovery infrastructure layers in the containers of the second cloud service are operational to handle the service request, the service request to the second cloud service.
Example C5. A method as in any of examples C1-C4, further comprising: selecting, with the cloud exchange, the second cloud service from among a plurality of available cloud services to host the disaster recovery infrastructure layers, prior to provisioning the disaster recovery infrastructure layers in the containers of the second cloud service.
Example C6. A method as in any of examples C1-C5, wherein provisioning the disaster recovery infrastructure interface layer and provisioning the disaster recovery infrastructure layers are performed by a disaster recovery manager of the orchestration engine.
Example C7. A method as in any of examples C1-C6, wherein provisioning the disaster recovery infrastructure layers comprises provisioning an interface layer, a storage layer, a compute layer, and a network layer in the containers of the second cloud service.
Example C8. A method as in any of examples C1-C7, further comprising provisioning, in a networking platform of the cloud exchange, a virtual circuit to transport data packets between the containers of the first cloud service and the containers of the second cloud service.
Example C9. A method as in example C8, further comprising communicating, with the cloud exchange, the code and state from the containers of the first cloud service to the containers of the disaster recovery infrastructure layers of the second cloud service via the virtual circuit.
Example C10. A method as in any of examples C1-C9, further comprising: placing a hold on operations of one or more of the containers of the first cloud service prior to obtaining the code and state from the containers of the first cloud service; and re-starting the operations from the one or more of the containers of the first cloud service in the containers of the second cloud service subsequent to communicating the code and state to the disaster recovery infrastructure layers in the containers of the second cloud service.
Example C11. A method as in example C10, wherein placing the hold on the operations of the one or more of the containers of the first cloud service comprises locking state stored to an in-memory data store at the first cloud service.
Example C12. A method as in any of examples C1-C11, wherein the state from containers of the first cloud service comprises one or more of: application data, application stack configuration data, microservices state, memory data, commands, process information, and instruction pointers.
Example C13. A method as in any of examples C1-C12, wherein the code comprises executable instruction code for one or more of: applications, application specific libraries, microservices, and microservice specific libraries.
Example C14. A method as in any of examples C1-C13, wherein copying the state from the containers in the first cloud service is performed while the containers in the first cloud service are executing one or more applications.
Example C15. A method as in any of examples C1-C14, wherein detecting the indication of the disruption in the first cloud service comprises detecting an indication of a qualifying disruption in accordance with disaster recovery configuration settings selected via user inputs to the cloud exchange.
Example C16. A method as in example C15, wherein the disaster recovery configuration settings comprise: criteria to define disruptions in the first cloud service that qualify as the qualifying disruption; and criteria for selecting the second cloud service.
Example C17. A method as in example C15, further comprising providing, with the cloud exchange, an interface for receiving the user inputs to select the disaster recovery configuration settings.
Example C18. A method as in any of examples C1-C17, further comprising: associating, with the cloud exchange, a container identifier and a network address of a first container of the first cloud service with a container identifier and a network address of a second container of the disaster recovery infrastructure layer; and communicating code and state from the first container to the second container based on the association.
Example C19. A method as in any of examples C1-C18, further comprising: placing a hold on service requests to the containers of the first cloud service, subsequent to detecting the indication of the disruption in the first cloud service; and redirecting the service requests to the disaster recovery infrastructure layers in the containers of the second cloud service, subsequent to the code and state being communicated to the disaster recovery infrastructure layers.
Example C20. A method as in any of examples C1-C19, further comprising updating, in a routing table of the orchestration engine, routes to the containers of the first cloud service with routes to the containers of the disaster recovery infrastructure layers, subsequent to communicating the code and state to the disaster recovery infrastructure layers in the containers of the second cloud service.
Example C21. A computing system comprising: at least one processor operably coupled to a memory; and an orchestration engine for a cloud exchange, the orchestration engine configured for execution by the at least one processor, wherein the orchestration engine is configured to: detect an indication of a disruption in a first cloud service provided by a first cloud service provider network coupled to the cloud exchange to send and receive data packets via the cloud exchange; provision, in response to detecting the indication of the disruption in the first cloud service, disaster recovery infrastructure layers in containers of a second cloud service provided by a second cloud service provider network coupled to the cloud exchange to send and receive data packets via the cloud exchange; obtain code and state from containers of the first cloud service; and communicate the code and state to the disaster recovery infrastructure layers in the containers of the second cloud service.
Example C22. A computer-readable medium comprising instructions for causing at least one programmable processor of a cloud exchange to: detect an indication of a disruption in a first cloud service provided by a first cloud service provider network coupled to the cloud exchange to send and receive data packets via the cloud exchange; provision, in response to detecting the indication of the disruption in the first cloud service, disaster recovery infrastructure layers in containers of a second cloud service provided by a second cloud service provider network coupled to the cloud exchange to send and receive data packets via the cloud exchange; obtain code and state from containers of the first cloud service; and communicate the code and state to the disaster recovery infrastructure layers in the containers of the second cloud service.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), Flash memory, a hard disk, a CD-ROM, a floppy disk, a cassette, magnetic media, optical media, or other memory devices and/or computer readable media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

Aspects, embodiments and features of the invention may also be defined by the following clauses.
1. A method comprising:
   sending, by a container to a cloud exchange via an application programming interface exposed by an interconnection platform of the cloud exchange, container registration data for the container, the container registration data comprising a network address for a host that executes the container and a container identifier for the container.
2. The method of clause 1, wherein the container identifier comprises one of a Transmission Control Protocol (TCP) port and a User Datagram Protocol (UDP) port.
3. The method of clause 1, wherein the container comprises a user-space instance from a plurality of user-space instances that share an operating system executing on the host.
4. The method of clause 1, wherein the container executes at an enterprise network coupled to the cloud exchange to receive, via one or more virtual circuits, cloud services from one or more cloud service providers coupled to the cloud exchange.
5. The method of clause 4, wherein the sending the container registration data comprises sending the container registration data via the one or more virtual circuits.
6. The method of clause 1, wherein the container executes at a cloud service provider network coupled to the cloud exchange to provide, via one or more virtual circuits, a cloud service to one or more customers coupled to the cloud exchange.
7. The method of clause 6, wherein the sending the container registration data comprises sending the container registration data via the one or more virtual circuits.
8. The method of clause 1,
   wherein the container comprises a first container, and
   wherein the container registration data comprises first container registration data, the method further comprising:
      receiving, by the container from the cloud exchange, second container registration data for a second container; and
      sending, by the container to the second container based on the second container registration data, a data communication.
9. The method of clause 8,
   wherein the first container executes at a first private network coupled to the cloud exchange, and
   wherein the second container executes at a second private network coupled to the cloud exchange.
10. The method of clause 9,
   wherein the first private network comprises an enterprise network for an enterprise customer of a cloud exchange provider for the cloud exchange, and
   wherein the second private network comprises a cloud service for a cloud service provider customer of the cloud exchange provider for the cloud exchange.
11. The method of clause 9,
   wherein the first private network comprises a cloud service for a first cloud service provider customer of a cloud exchange provider for the cloud exchange, and
   wherein the second private network comprises a cloud service for a second cloud service provider customer of the cloud exchange provider for the cloud exchange.
12. The method of clause 8, further comprising:
   determining, by the first container, a health of the second container at least in part by sending the data communication; and
   redirecting application traffic from the second container to a third container in response to determining the health of second container.
13. A method comprising:
   receiving, by a cloud exchange from a container executing at a private network coupled to the cloud exchange, container registration data for the container, the container registration data comprising a network address for a host that executes the container and a container identifier for the container; and
   storing, by the cloud exchange, the container registration data.
14. The method of clause 13,
   wherein the container comprises a first container, and
   wherein the private network comprises a first private network, the method further comprising:
      sending, by the cloud exchange to a second container executing at a second private network,
      the container registration data.
15. The method of clause 14, further comprising:
   storing data indicating an association between the first container and the second container,
   wherein sending the container registration data comprises sending the container registration data based on data indicating the association.
16. The method of clause 14, further comprising:
   receiving, by the cloud exchange, an indication of the association from an enterprise.
17. The method of clause 13, further comprising:
   determining, by the cloud exchange, a health of the container at least in part by sending a data communication to the container, the data communication including the container registration data.
18. The method of clause 17, further comprising:
   in response to determining the container is not healthy, migrating the container to another private network.
19. The method of clause 17, further comprising:
   in response to determining the container is not healthy, redirecting application traffic from the container to another container executing at a different private network.
20. The method of clause 17, further comprising:
   storing, by the cloud exchange, state for the container indicating a state of one or more applications executing on the container,
   wherein migrating the container to another private network comprising sending the state for the container to the another private network.
21. The method of clause 13, further comprising:
   configuring, by the cloud exchange, a virtual circuit to the private network, wherein receiving the container registration data comprises receiving the container registration data via the virtual circuit.
22. The method of clause 13, further comprising:
   sending, by the cloud exchange to the container based on the container registration data, a data communication.
23. A computing device comprising:
   at least one processor operably coupled to a memory;
   a kernel configured for execution by the at least one processor; and
   a container configured to execute by the kernel, wherein the container comprises a network module configured to output container registration data to a cloud exchange via an application programming interface exposed by an interconnection platform of the cloud exchange, the container registration data comprising a network address for a host that executes the container and a container identifier for the container.
24. A cloud exchange comprising:
   a network; and
   an interconnection platform configured to configure the network to interconnect a plurality of private networks,
   wherein the cloud exchange is configured to receive, from a container executing at a private network of the plurality of private networks and via the interconnection platform, container registration data for the container, the container registration data comprising a network address for a host that executes the container and a container identifier for the container.
25. A method comprising:
   transmitting, by a first container of a first private network of a plurality of private networks coupled to a cloud exchange and to a router of the cloud exchange, a first data communication to request an indication of a health of a second container of a second private network of the plurality of private networks coupled to the cloud exchange; and
   receiving, by the first container and from the router, a second data communication originated by a second container of a second private network of the plurality of private networks coupled to the cloud exchange, the second data communication indicating the health of the second container.
26. The method of clause 25, further comprising:
   determining, by the first container based on the second data communication, the health of the second container; and
   deploying, by the first container, a third container upon determining that the second container is unhealthy.
27. The method of clause 26, wherein:
   the first data communication comprises an echo request packet;
   the second data communication comprises an echo response packet; and
   determining, by the first container, the health of the second container comprises determining,
   by the first container, that the second container is unhealthy if the first container does not receive the echo response packet within a pre-determined time.
28. The method of clause 25, wherein the first data communication comprises:
   a container identifier of the second container; and
   a network address for a host executing at the second private network and hosting the second container.
29. A method comprising:
   receiving, by an interconnection platform for a cloud exchange configured with one or more virtual circuits to interconnect private networks of a plurality of private networks, the interconnection platform comprising processing circuitry, an indication to perform at least one of a hot swap service, a hot scaling service, or a disaster recovery service of a first container of a first host computing device of a first private network of the plurality of private networks to a second container of a second host computing device of a second private network of the plurality of private networks, the second private network different from the first private network; and
   directing, by the interconnection platform in response to receiving the indication, application traffic from the first container of the first private network to the second container of the second private network.
30. The method of clause 29,
   wherein the first private network comprises an enterprise network for an enterprise customer of a cloud exchange provider for the cloud exchange, and
   wherein the second private network comprises a cloud service provider network for a cloud service provider customer of the cloud exchange provider.
31. The method of clause 29,
   wherein the first private network comprises a first cloud service provider network for a first cloud service provider customer of a cloud exchange provider for the cloud exchange, and
   wherein the second private network comprises a second cloud service provider network for a second cloud service provider customer of the cloud exchange provider.
32. The method of any one of clause 29 to 31, further comprising:
   creating, by the interconnection platform in response to the indication, the second container on the second private network.
33. The method of any one of clause 29 to 32, further comprising:
   receiving, by the interconnection platform, container registration data for the first container; and
   transmitting, by the interconnection platform, the container registration from the first container to the second container,
   wherein the container registration data comprises a network address for the first host that executes the first container and a container identifier for the first container.
34. The method of any one of clause 29 to 33, wherein directing application traffic from the first container of the first private network to the second container of the second private network by the interconnection platform further comprises:
   configuring the one or more virtual circuits as one or more virtual local area networks (VLANs) to direct the application traffic from the first container to the second container.
35. The method of any one of clause 29 to 33, wherein directing application traffic from the first container of the first private network to the second container of the second private network by the interconnection platform further comprises:
   configuring a virtual circuit of the one or more virtual circuits as a hot swap virtual circuit to direct the application traffic from the first container to the second container.
36. The method of any one of clause 29 to 33, wherein directing application traffic from the first container of the first private network to the second container of the second private network by the interconnection platform further comprises:
   configuring a mapping of a cloud exchange address and container host address to direct the application traffic from the first container to the second container.
37. The method of any one of clause 29 to 36,
   wherein the first container identifier comprises one of a Transmission Control Protocol (TCP) port and a User Datagram Protocol (UDP) port.
38. The method of any one of clause 29 to 36, further comprising:
   transmitting, by the interconnection platform to the first container, second container registration data for the second container, wherein the first container transmits a data communication to the second container based on the second container registration data.
39. The method of clause 38, further comprising:
   receiving, by the interconnection platform from the first container, a request to deploy a third container based at least in part on a result of the transmitting of the data communication; and
   directing application traffic from the second container to the third container.
40. The method of clause 38, further comprising:
   storing, by the interconnection platform, data indicating an association between the first container and the second container; and
   wherein the transmitting of the second container registration data is based on the data indicating the association.
41. A cloud exchange comprising:
   at least one computing device comprising processing circuitry;
   at least one memory operably coupled to the processing circuitry;
   a network; and
   an interconnection platform configured for execution by the processing circuitry to configure the network to interconnect a plurality of private networks,
   the plurality of private networks including an enterprise network coupled to the cloud exchange and one or more cloud service provider networks coupled to the cloud exchange,
   wherein the interconnection platform is configured to receive an indication to perform at least one of a hot swap service, a hot scaling service, or a disaster recovery service of a first container of a first host computing device of a first private network of the plurality of private networks to a second container of a second host computing device of a second private network of the plurality of private networks, the second private network different from the first private network, and
   wherein the interconnection platform is further configured to direct, in response to the received indication, application traffic from the first container of the first private network to the second container of the second private network.
42. A computer-readable storage medium encoded with instructions for causing one or more programmable processors to perform the method recited by any of clause 29-41.

Various examples have been described. These and other examples are within the scope of the following claims.

## Claims

1. A system for facilitating inter-container communications via a cloud exchange, the system comprising:
at least one processor operably coupled to at least one memory device, and configured to execute instructions to:
provide an interface for receiving one or more customer-selected hot swap configuration criteria, wherein the one or more customer-selected hot swap configuration criteria comprises a customer-selected first cloud service provider and a customer-selected second cloud service provider;
associate, in response to receiving the one or more customer-selected hot swap configuration criteria, an address of a first container of a first private network with an address of a second container of a second private network, wherein the first container is hosted by the customer-selected first cloud service provider, and wherein the cloud exchange creates the second container with the customer-selected second cloud service provider;
store data indicating the association of the address of the first container of a first private network with a second container of the second private network, wherein the first private network and the second private network are coupled to the cloud exchange to send and receive data packets via the cloud exchange; and
copy, in response to the one or more customer-selected hot swap configuration criteria and based on the association, state of the first container to the second container.

2. The system of claim 1, wherein the at least one processor is further configured to:
receive cloud service traffic from an enterprise network; and
redirect the cloud service traffic from the first container to the second container.

3. The system of any of claims 1 through 2, wherein the at least one processor is configured to copy the state of the first container to the second container while the first container is executing one or more applications.

4. The system of any of claims 1 through 3, wherein the at least one processor is configured to register a registration handle for the second container with the first container via the cloud exchange, the registration handle comprising a network address for a host of the second private network that executes the second container and a container identifier for the second container.

5. The system of any of claims 1 through 4, wherein to associate the address of the first container with the second container, the at least one processor is configured to register a Uniform Resource Identifier, URI, of the second container with a data store of container information.

6. The system of any of claims 1 through 5, wherein the at least one processor is further configured to:
partition tasks from the first container between the first container and the second container,
wherein to copy the state of the first container to the second container, the at least one processor is configured to copy only the tasks partitioned to the second container.

7. The system of any of claims 1 through 6, wherein the at least one processor is further configured to store, in the at least one memory device, a data store of container registration information, wherein the container registration information comprises data associating the address of the first container with the second container.

8. The system of any of claims 1 through 7, wherein associating the address of the first container with the address of the second container and copying the state of the first container to the second container are performed in response to a customer-entered request.

9. The system of any of claims 1 through 8, wherein the one or more customer-selected hot swap configuration criteria are stored in an orchestration engine of the cloud exchange.

10. The system of any of claims 1 through 9, wherein the at least one processor is configured to associate the address of the first container with the address of the second container and copy the state of the first container to the second container in response to a timing defined by a customer-selected schedule.

11. The system of any of claims 1 through 10, wherein the at least one processor is further configured to:
place a hold on operations of the first container prior to copying the state of the first container to the second container; and
re-start the operations in the second container subsequent to copying the state of the first container to the second container.

12. The system of any of claims 1 through 11,
wherein the first container comprises a user-space instance from a plurality of user-space instances that share an operating system executing on a host of the first private network, and
wherein the second container comprises a user-space instance from a plurality of user-space instances that share an operating system executing on a host of the second private network.

13. The system of any of claims 1 through 12, wherein the second private network comprises a cloud service provider network coupled to the cloud exchange to provide, via one or more virtual circuits, a cloud service to one or more enterprise networks coupled to the cloud exchange.

14. A method as performed by the system of any of claims 1 through 13.

15. A computer-readable storage medium encoded with instructions for causing one or more programmable processors to perform a method as performed by the system of any of claims 1 through 13.
